# EUROPEAN PATENT APPLICATION

(11) **EP 4 815 350 A1**
(43) Date of publication of application: **30.09.2026**
(21) Application number: 24910597.4
(22) Date of filing: 04.12.2024
(51) Int. Cl.: H04L 1/00

(54) **ENCODING METHOD AND COMMUNICATION APPARATUS**

(30) Priority: 28.12.2023 CN 202311847181
(71) Applicant: Huawei Technologies Co., Ltd., Shenzhen, Guangdong 518129 (CN)
(72) Inventor: QIN, Kangjian, Shenzhen, Guangdong 518129 (CN); ZHANG, Huazi, Shenzhen, Guangdong 518129 (CN); WANG, Xianbin, Shenzhen, Guangdong 518129 (CN); TONG, Jiajie, Shenzhen, Guangdong 518129 (CN); LIU, Ke, Shenzhen, Guangdong 518129 (CN); WANG, Jun, Shenzhen, Guangdong 518129 (CN)
(74) Representative: Grünecker Patent- und Rechtsanwälte PartG mbB
(86) International application number: PCT/CN2024/136805
(87) International publication number: WO 2025/139665

(57) **Abstract**

This application provides an encoding method and a communication apparatus, and mainly provides a plurality of manners of generating a pre-transformed codeword based on shift register for a pre-transformed polar code, to obtain better error correction performance of a PC-polar code. In addition, a manner of processing a message bit, a check bit, and a frozen bit in a polar code are processed is more unified, and description complexity is low. An output of shift register supports a pre-transformed codeword being a non-systematic code, and also supports a pre-transformed codeword being a systematic code. A combination of a plurality of forms of shift register, a quantity of taps, a tap direction, and a feedback manner further improves performance of the pre-transformed polar code.

## Description

This application claims priority to Chinese Patent Application No. 202311847181.7, filed with the China National Intellectual Property Administration on December 28, 2023 and entitled "ENCODING METHOD AND COMMUNICATION APPARATUS", which is incorporated herein by reference in its entirety.

### TECHNICAL FIELD

This application relates to the channel coding field, and in particular, to an encoding method and a communication apparatus.

### BACKGROUND

Performing upper triangular pre-transformed encoding (pre-transformed encoding) before polar (polar) encoding is performed may improve a code spectrum of the polar code and improve error correction performance of the polar code. Cyclic redundancy check (cyclic redundancy check, CRC) encoding, parity check (parity check, PC) encoding, and convolutional encoding all belong to the upper triangular pre-transformation encoding that may improve the code spectrum of the polar code. A pre-transformed polar code of a fifth generation (fifth generation, 5G) system is a PC-polar code. The PC-polar code generates a pre-transformed encoded codeword based on shift register with single-tap feedback. However, the shift register with single-tap feedback can generate a simple PC check relationship, and improvement of the code spectrum is limited. In addition, a turbo code of long term evolution (long term evolution, LTE) is also a convolutional codeword generated based on shift register. In this technology, a feedback manner is performing single-tap feedback after reading along a tap, and error correction performance is limited.

Therefore, how to further improve error correction performance of a polar code is a problem that needs to be urgently resolved.

### SUMMARY

This application provides an encoding method and a communication apparatus, to improve error correction performance of a polar code and improve a code spectrum.

According to a first aspect, an encoding method is provided. The method may be performed by a first communication device, a component (for example, a processor, a chip, a chip system, or a hardware circuit) in the first communication device, or a logical module or software that can implement all or some functions of the first communication device. The method includes: obtaining an input sequence; performing pre-transformed encoding on the input sequence based on shift register to obtain an output sequence; and performing polar encoding on the output sequence to obtain a codeword sequence, where the shift register correspond to at least two taps, directions of the at least two taps are write-in, positions of the at least two taps are determined by a pre-transformed encoding polynomial, and values of a coefficient of a lowest power term and a coefficient of a highest power term of the pre-transformed encoding polynomial are both 1; and if a current position in the input sequence corresponds to a dynamic frozen bit, an output of the shift register is related to a value in an L^{th} register in a shift direction of the shift register, the L^{th} register is a register corresponding to the highest power term of the pre-transformed encoding polynomial, and L is an integer greater than or equal to 1.

In this technical solution, pre-transformed encoding is performed on the input sequence based on the shift register, where the shift register have the at least two taps, and the directions of the at least two taps are write-in. Because the directions of the taps are write-in, the shift register may be updated immediately based on values of the taps. Therefore, a value in the shift register is updated without a delay, and error correction performance of a PC-polar code can be improved.

With reference to the first aspect, in some implementations of the first aspect, a value in the L^{th} register is related to a value in the first L-1 registers.

In this implementation, the tap is in a feedforward manner, and the output of the shift register is related to a value in the L^{th} register. The value in the L^{th} register is obtained by shifting values in the first L-1 registers, and a code check capability is stronger. In addition, in the feedforward manner, the value in the L^{th} register is related to some message bits located before the current position in the input sequence.

With reference to the first aspect, in some implementations of the first aspect, if the current position in the input sequence is a message bit, a value in a first register in the shift register is updated to an exclusive OR of the value in the first register and a value of a first tap corresponding to the first register, the value of the first tap is an input of the shift register, and the first register is any register in the shift register.

With reference to the first aspect, in some implementations of the first aspect, a value in the L^{th} register is related to all message bits located before the current position in the input sequence.

In this implementation, the tap is in a feedback manner, the shift register have a longer memory length, pre-transformed encoding is performed based on the shift register, and concatenation is performed with the polar code, so that better code spectrum performance can be obtained.

With reference to the first aspect, in some implementations of the first aspect, if the current position in the input sequence is a message bit, a value of a first register in the shift register is updated to an exclusive OR value of the value in the first register and a value of a corresponding first tap, the value of the first tap is an exclusive OR value of a value of a feedback input and the message bit at the current position, and the first register is any register in the shift register.

With reference to the first aspect, in some implementations of the first aspect, if the current position in the input sequence corresponds to the message bit, the output of the shift register is related to the value in the L^{th} register in the shift direction of the shift register; or if the current position in the input sequence corresponds to a frozen bit, the output of the shift register is 0.

In this implementation, the pre-transformed encoding uses a non-systematic code. Regardless of whether the current position in the input sequence is a message bit or a dynamic frozen bit, the input sequence is output from a fixed position of the shift register, for example, output from an end register (namely, the L^{th} register) in the shift direction of the shift register. A manner of describing the message bit and the dynamic frozen bit is more unified, and description complexity is low.

With reference to the first aspect, in some implementations of the first aspect, if the current position in the input sequence corresponds to the message bit, the output of the shift register is the input of the shift register; or if the current position in the input sequence corresponds to a frozen bit, the output of the shift register is 0.

In this implementation, the pre-transformed encoding uses a systematic code, and decoding complexity may be further reduced on the basis of obtaining a beneficial technical effect in which a direction of a tap is write-in.

With reference to the first aspect, in some implementations of the first aspect, a length L of the shift register is a prime number.

With reference to the first aspect, in some implementations of the first aspect, L is 5 or 7; if L is 7, a quantity of taps corresponding to the shift register does not exceed 5; or if L is 5, a quantity of taps corresponding to the shift register does not exceed 3.

In this implementation, for a design of the length L of the shift register and a design of the quantity of taps corresponding to the shift register, both coding complexity and code error correction performance can be considered.

With reference to the first aspect, in some implementations of the first aspect, that the shift register correspond to the at least two taps, the directions of the at least two taps are write-in, the positions of the at least two taps are determined by the pre-transformed encoding polynomial, and the values of the coefficient of the lowest power term and the coefficient of the highest power term of the pre-transformed encoding polynomial are both 1 includes: the shift register correspond to two tap groups, and a direction of a tap in at least one of the two tap groups is write-in; a position of a tap in a first tap group in the two tap groups is determined by a first pre-transformed encoding polynomial, and a position of a tap in a second tap group in the two tap groups is determined by a second pre-transformed encoding polynomial; and a value of a coefficient of a lowest power term and a value of a coefficient of a highest power term of each of the first pre-transformed encoding polynomial and the second pre-transformed encoding polynomial are 1.

In this implementation, the shift register have both a feedforward tap and a feedback tap. Feedforward and the feedback are combined, and a direction of at least one group of taps in the feedforward tap and the feedback tap is write-in, so that code spectrum performance or a code check capability can be improved.

With reference to the first aspect, in some implementations of the first aspect, a direction of a tap in the first tap group is write-in, and a direction of a tap in the second tap group is read-out; and if the current position in the input sequence corresponds to a message bit, a value in a first register in the shift register is updated to an exclusive OR value of a value in the first register and a value of a first tap corresponding to the first register, the value of the first tap is an exclusive OR value of a feedback input and the message bit at the current position, the feedback input is an exclusive OR value of a value of a tap corresponding to a power term whose coefficient is greater than 0 in the second pre-transformed encoding polynomial, and the first register is any register in the shift register.

In this implementation, the shift register are of a type with feedforward and feedback, a feedforward manner is multi-tap writing, a feedback manner is multi-tap reading, and has a larger memory length. Based on this, pre-transformed encoding is performed, and concatenation is performed with the polar code, so that code spectrum performance can be further improved.

With reference to the first aspect, in some implementations of the first aspect, a direction of a tap in the first tap group is write-in, and a direction of a tap in the second tap group is write-in; and if the current position in the input sequence corresponds to a message bit, a value in a first register in the shift register is updated to an exclusive OR value of a value in the first register, a value of a first tap corresponding to the first register, and a value of a second tap, the value of the first tap or the value of the second tap is an exclusive OR value of an input of the shift register and a feedback input, and the feedback input is the output of the shift register, where the first tap belongs to the first tap group, and the second tap belongs to the second tap group.

In this implementation, the shift register are of a type with feedforward and feedback, the feedforward manner is multi-tap writing, and the feedback manner is also multi-tap writing. A feedback bit is used as an output bit and has a lower correlation with the current input bit, and a codeword of the pre-transformed encoding is more random.

With reference to the first aspect, in some implementations of the first aspect, if the current position in the input sequence corresponds to the message bit, the output of the shift register is related to the value in the L^{th} register in the shift direction of the shift register; or if the current position in the input sequence corresponds to a frozen bit, the output of the shift register is 0.

In this implementation, the pre-transformed encoding uses a non-systematic code. Regardless of whether the current position in the input sequence is a message bit or a dynamic frozen bit, the input sequence is output from a fixed position of the shift register. A manner of describing the message bit and the dynamic frozen bit is more unified, and description complexity is low.

With reference to the first aspect, in some implementations of the first aspect, if the current position in the input sequence corresponds to the message bit, the output of the shift register is the input of the shift register; or if the current position in the input sequence corresponds to a frozen bit, the output of the shift register is 0.

In this implementation, the pre-transformed encoding uses a systematic code, and decoding complexity may be further reduced on the basis of obtaining a beneficial technical effect in which a direction of a tap is write-in.

With reference to the first aspect, in some implementations of the first aspect, a direction of a tap in the first tap group is read-out, and a direction of a tap in the second tap group is write-in; and if the current position in the input sequence corresponds to a message bit, a value in a first register in the shift register is updated to an exclusive OR value of the value in the first register and a value of a first tap corresponding to the first register, the first tap belongs to the second tap group, and the first register is any register in the shift register.

In this implementation, the shift register are of a type with feedforward and feedback, the feedforward manner is multi-tap reading, and the feedback manner is multi-tap writing. The output of the shift register is related to values in a plurality of registers, and a check capability is stronger.

With reference to the first aspect, in some implementations of the first aspect, if the current position in the input sequence corresponds to the message bit, the output of the shift register is related to a value of the tap in the first tap group; or if the current position in the input sequence corresponds to a frozen bit, the output of the shift register is 0.

With reference to the first aspect, in some implementations of the first aspect, if the current position in the input sequence corresponds to the message bit, the output of the shift register is related to the value of the tap in the first tap group, and that the output of the shift register is related to the value of the tap in the first tap group includes: if the current position in the input sequence corresponds to the message bit, the output of the shift register is an exclusive OR value of a value of a tap corresponding to a power term whose coefficient is greater than 0 in the first pre-transformed encoding polynomial.

With reference to the first aspect, in some implementations of the first aspect, if the current position in the input sequence corresponds to the message bit, the output of the shift register is the input of the shift register; or if the current position in the input sequence corresponds to a frozen bit, the output of the shift register is 0.

With reference to the first aspect, in some implementations of the first aspect, a value of a tap in the second tap group is an exclusive OR value of the input of the shift register and a feedback input, and the feedback input is the value in the L^{th} register in the shift direction of the shift register.

According to a second aspect, an encoding method is provided. The method may be performed by a first communication device, a component (for example, a processor, a chip, a chip system, or a hardware circuit) in the first communication device, or a logical module or software that can implement all or some functions of the first communication device. The method includes: obtaining an input sequence; performing pre-transformed encoding on the input sequence based on shift register to obtain an output sequence; and performing polar encoding on the output sequence to obtain a codeword sequence, where the shift register correspond to at least two taps, directions of the at least two taps are read-out, positions of the at least two taps are determined by a pre-transformed encoding polynomial, and values of a coefficient of a lowest power term and a coefficient of a highest power term of the pre-transformed encoding polynomial are both 1; and if a current position in the input sequence corresponds to a dynamic frozen bit, an output of the shift register is related to a value in an L^{th} register in a shift direction of the shift register, the L^{th} register is a register corresponding to the highest power term of the pre-transformed encoding polynomial, and L is an integer greater than or equal to 1.

In this technical solution, the shift register correspond to the at least two taps, and the directions of the at least two taps are read-out. Compared with a case in which the directions of the taps are write-in, when the directions of the taps are read-out, a read-out tap uses an exclusive OR value of a value in a register corresponding to a coefficient of the pre-transformed encoding polynomial as an output of the shift register or a feedback input, and an obtained value of the output of the shift register or the feedback input is an exclusive OR value that integrates values in all related shift register, thereby improving a code spectrum and improving error correction performance.

With reference to the second aspect, in some implementations of the second aspect, the output of the shift register is an exclusive OR value of an input of the shift register and a value of a first tap in the at least two taps, where the first tap is a tap corresponding to a power term whose coefficient is greater than 0 in the pre-transformed encoding polynomial.

In this implementation, a tap corresponding to the shift register is a feedforward tap, and has a direction being read-out. The output of the shift register is related to a value in the shift register corresponding to the pre-transformed encoding polynomial.

With reference to the second aspect, in some implementations of the second aspect, the output of the shift register is an exclusive OR value of the input of the shift register and a feedback input, and the feedback input is an exclusive OR value of the at least two taps.

In this implementation, a tap corresponding to the shift register is a feedback tap, and has a direction being read-out. The feedback input of the shift register is related to a value in the shift register corresponding to the pre-transformed encoding polynomial. Information about the feedback input is more comprehensive than that in a write-in direction and can improve a code spectrum.

With reference to the second aspect, in some implementations of the second aspect, that the shift register correspond to the at least two taps, the directions of the at least two taps are read-out, the positions of the at least two taps are determined by the pre-transformed encoding polynomial, and the values of the coefficient of the lowest power term and the coefficient of the highest power term of the pre-transformed encoding polynomial are both 1 includes:
the shift register correspond to two tap groups, and directions of taps in the two tap groups are all read-out; a position of a tap in a first tap group in the two tap groups is determined by a first pre-transformed encoding polynomial, and a position of a tap in a second tap group in the two tap groups is determined by a second pre-transformed encoding polynomial; and a value of a coefficient of a lowest power term and a value of a coefficient of a highest power term of each of the first pre-transformed encoding polynomial and the second pre-transformed encoding polynomial are 1; and
the output of the shift register is an exclusive OR value of a first input and a value of a tap in the first tap group, the first input is an exclusive OR value of the input of the shift register and the feedback input, and the feedback input is an exclusive OR value of taps in the second tap group.

In this implementation, taps corresponding to the shift register include a feedforward tap and a feedback tap, and directions of the taps are all read-out. Values of the feedback input and the output of the shift register are results obtained by integrating values in shift register corresponding to a current tap, which can improve the code spectrum.

According to a third aspect, a communication apparatus is provided. The communication apparatus has a function of implementing the method in the first aspect or the second aspect, or the method in any possible implementation of the first aspect or the second aspect. The function may be implemented by hardware, or may be implemented by hardware executing corresponding software. The hardware or the software includes one or more units corresponding to the foregoing functions.

According to a fourth aspect, this application provides a communication apparatus, including at least one processor. The at least one processor is coupled to at least one memory, the at least one memory is configured to store a computer program or instructions, and the at least one processor is configured to invoke the computer program or the instructions from the at least one memory and run the computer program or the instructions, so that the communication apparatus performs the method in any one of the first aspect or the possible implementations of the first aspect, or the method in any possible implementations of the second aspect.

According to a fifth aspect, this application provides a communication apparatus, including a communication interface and a circuit. The communication interface is configured to receive an input sequence, and input the input sequence to the circuit. The circuit is configured to perform pre-transformed encoding on the input sequence to obtain an output sequence. The communication interface is further configured to output the output sequence. Optionally, the circuit may be configured to perform polar encoding on the output sequence to obtain a codeword sequence. In this case, the communication interface is configured to output the codeword sequence.

For example, the communication apparatus in the third aspect to the fifth aspect is an encoding apparatus, for example, an encoder.

According to a sixth aspect, this application provides a computer-readable storage medium. The computer-readable storage medium stores computer program code or instructions, and when the computer instructions are run on a computer, the method in any one of the first aspect or the possible implementations of the first aspect is implemented, or the method in any one of the second aspect or the possible implementations of the second aspect is implemented.

According to a seventh aspect, this application provides a computer program product. The computer program product includes computer program code or instructions, and when the computer program code or instructions are run on a computer, the method in any one of the first aspect or the possible implementations of the first aspect is implemented, or the method in any one of the second aspect or the possible implementations of the second aspect is implemented.

According to an eighth aspect, this application provides a wireless communication system, including the communication apparatus according to any one of the third aspect to the fifth aspect.

### BRIEF DESCRIPTION OF DRAWINGS

FIG. 1 is a diagram of shift register with single-tap feedback that is used by 5G polar;
FIG. 2 is a diagram of a process of a communication system;
FIG. 3 is a schematic flowchart of an encoding method according to this application;
FIG. 4 is a diagram for feedforward poly RSB RHS, right shift, and pre-transformed encoding, that writes from a tap, which is output as a non-systematic code;
FIG. 5 is another equivalent diagram for feedforward poly RSB RHS, right shift, and pre-transformed encoding, that writes from a tap, which is output as a non-systematic code;
FIG. 6 is a diagram for feedforward poly MSB RHS, right shift, and pre-transformed encoding, that writes from a tap, which is output as a systematic code;
FIG. 7 is a diagram for feedback poly MSB RHS, right shift, and shift register writing from a tap;
FIG. 8 is a diagram for shift register for which a feedforward tap is for writing and a feedback tap is for reading;
FIG. 9 is a diagram for shift register for which a feedforward tap is for reading and a feedback tap is for writing;
FIG. 10 shows shift register for which a feedforward tap and a feedback tap are both for writing;
FIG. 11 is a diagram for shift register for which a feedforward tap is for reading;
FIG. 12 is a diagram for shift register for which a feedback tap is for reading;
FIG. 13 is a diagram for shift register for which directions of both a feedforward tap and a feedback tap are read-out;
FIG. 14 to FIG. 22 are performance simulation diagrams of a plurality of shift register according to this application;
FIG. 23 is a diagram of a structure of a communication apparatus according to this application;
FIG. 24 is a diagram of a structure of another communication apparatus according to this application; and
FIG. 25 is a diagram of a structure of still another communication apparatus according to this application.

### DESCRIPTION OF EMBODIMENTS

The following describes technical solutions of this application with reference to accompanying drawings.

To facilitate understanding of the technical solutions in this application, related concepts or technologies in embodiments are first briefly described.

Performing upper triangular pre-transformed encoding before polar encoding may improve a code spectrum of the polar code and improve error correction performance of the polar code. CRC encoding, PC encoding, and convolutional encoding all belong to such upper triangular pre-transformation encoding that may improve the code spectrum of the polar code.

In 5G, when 12≤k≤19, control channel coding uses a manner of combining PC encoding and CRC encoding as a pre-transformed encoding policy, where k is an information length. When k≥20, CRC encoding is used as a pre-transformed encoding policy to further improve polar code performance.

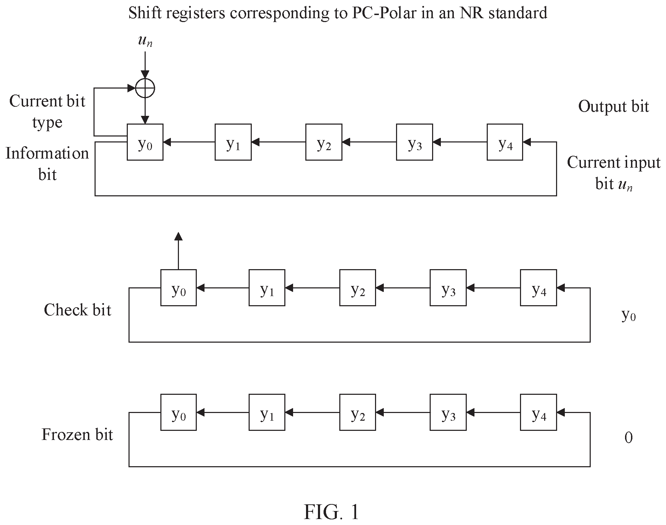

FIG. 1 is a diagram of shift register used by PC-polar in NR. For an NR PC-polar code, pre-transformed encoding is implemented by using shift register whose length is 5, as shown in FIG. 1. If a message bit is at a current position, the current bit and a leftmost value of a shift register are exclusive-ORed, and then stored in the leftmost of the shift register, the currently input message bit is used as a bit at the current position, and then the register is cyclically shifted. If a check bit is at a current position, a leftmost value of a shift register is taken as a check bit, and then the register is cyclically shifted left. If a frozen bit is at a current position, zero is directly output as a bit at the current position, and then a register is cyclically shifted left.

In an NR standard, pseudocode for performing pre-transformed polar encoding based on shift register and comments thereof are as follows:

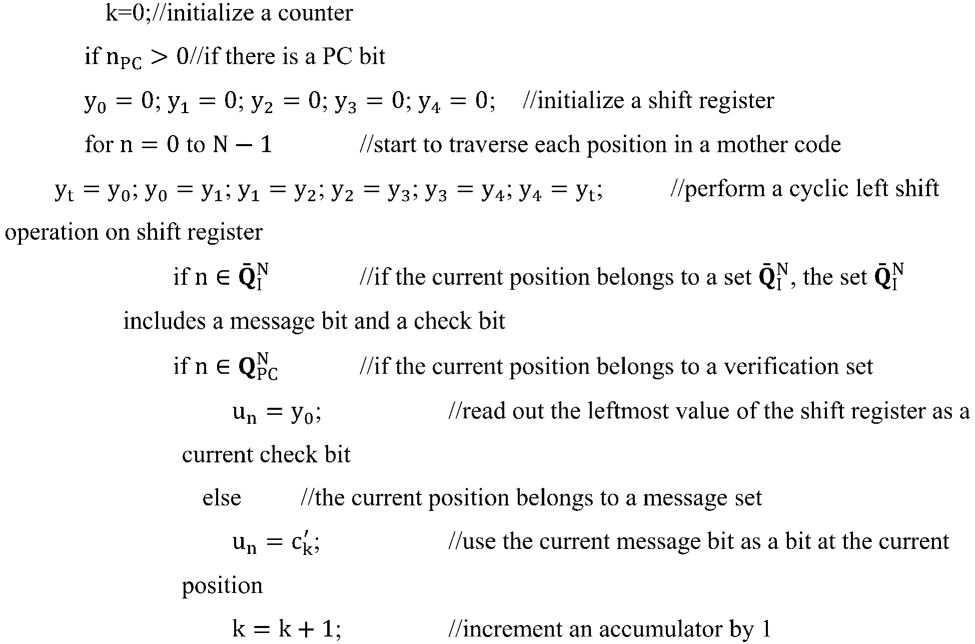

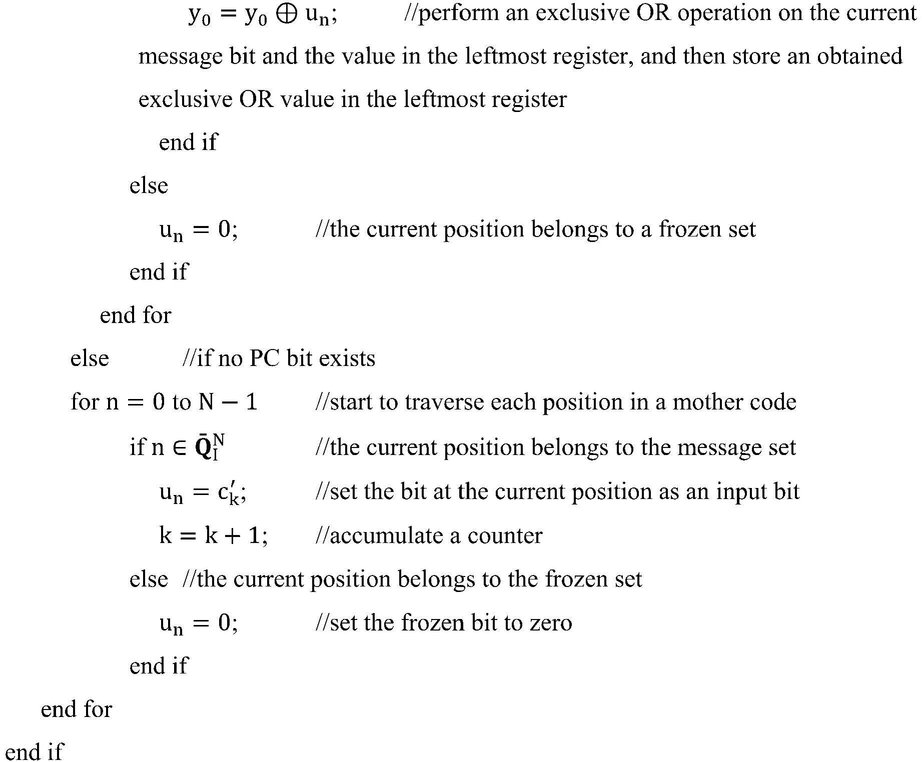

Polar encoding is performed on a pre-transformed codeword ***u*** to obtain an output ***d*** = [*d*₀ *d*₁ *d*₂ ... *d*_{*N*-1}], where ***d*** = ***uG**_{N}.*

As described above, the PC-polar code in the NR standard generates a pre-transformed encoded codeword based on shift register with single-tap feedback. A form of the shift register is feedback shift register; a direction of a tap is write-in; a quantity of taps is a single tap; a shift direction of the shift register is left shift; a position of a feedback tap and a position of an output tap are both the end (leftmost) of a movement direction; a shift register can be used to input a bit only when a message bit is at a current position; and a shift register can be used to output a bit when a check bit is at a current position. Shift timing logic of shift register is as follows. Reading is performed at a time point t, and writing is performed at a time point t+1. The shift register with single-tap feedback can generate a simple PC check relationship, and improvement of the code spectrum is limited. In addition, a message bit, a check bit, and a frozen bit are not processed in a unified manner, and description complexity is high.

An LTE-turbo code also uses a shift register to generate a convolutional codeword. However, this encoding scheme is independently used as a channel coding policy, and is not concatenated with a polar code for encoding. Error correction performance is not determined when the LTE-turbo code is directly used for pre-transformed encoding of the polar code.

Therefore, this application provides an encoding method, and mainly provides a plurality of manners of generating a pre-transformed codeword based on shift register for a pre-transformed polar code, to obtain better error correction performance of an NR PC-polar code. In addition, a manner of processing a message bit, a check bit, and a frozen bit in a polar code is more unified, and description complexity is low. An output of shift register supports a pre-transformed codeword being a non-systematic code, and also supports a transformed codeword being a systematic code. A combination of a plurality of forms of shift register, a quantity of taps, a tap direction, and a feedback manner further improves performance of the pre-transformed polar code.

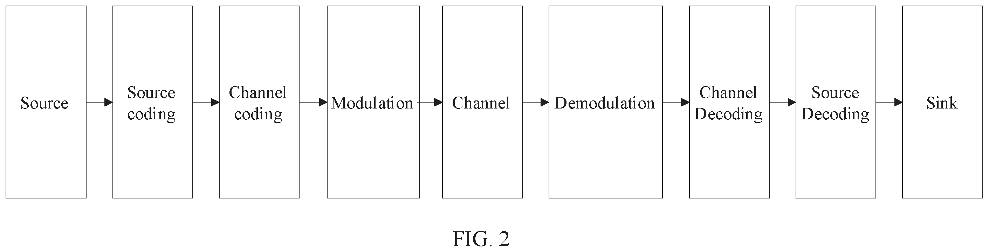

FIG. 2 is a diagram of a process of a communication system. As shown in FIG. 2, the technical solutions of this application mainly relate to a channel coding part. Channel coding is located between source coding and modulation, and is responsible for performing channel coding on bits generated by a source, and after modulation, a transmit end sends a modulation symbol to a receive end through a noisy channel. After performing demodulation, the receive end performs channel decoding. Channel decoding is located between demodulation and source decoding, and is responsible for recovering a source bit stream.

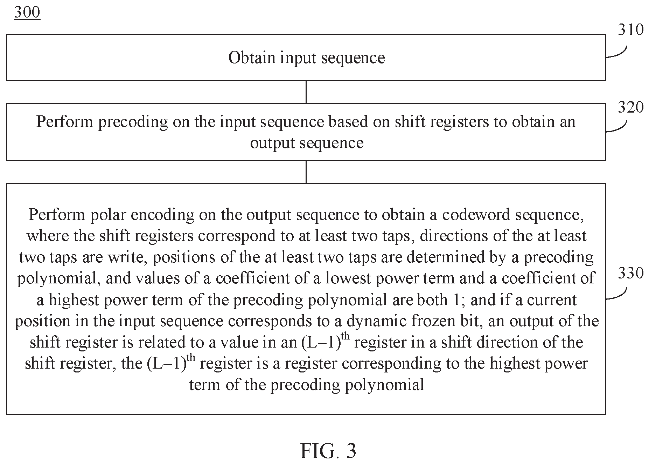

FIG. 3 is a schematic flowchart of an encoding method 300 according to this application. The method 300 may be performed by a first communication device, a component (for example, a chip, a chip system, or a circuit) in the first communication device, or a logical module or software that can implement all or some functions of the first communication device. In an example, the first communication device may be an encoding device. Description is made below by using an encoding device as an example.

310: The encoding device obtains an input sequence.

320: The encoding device performs pre-transformed encoding on the input sequence based on shift register to obtain an output sequence.

The input sequence herein is an input sequence of pre-transformed encoding, and the output sequence is an output sequence of the pre-transformed encoding.

330: The encoding device performs polar encoding on the output sequence to obtain a codeword sequence.

The encoding device further performs polar encoding on the output sequence of the pre-transformed encoding. By performing steps 310 to 330, the encoding device performs concatenated encoding of pre-transformed encoding and polar encoding, to obtain a codeword sequence.

The pre-transformed encoding is performed based on shift register. The shift register correspond to at least two taps, directions of the at least two taps are write-in, positions of the at least two taps are determined by a pre-transformed encoding polynomial, and values of a coefficient of a lowest power term and a coefficient of a highest power term of the pre-transformed encoding polynomial are both 1. If a current position in the input sequence corresponds to a dynamic frozen bit, an output of the shift register is related to a value in an L^{th} register in a shift direction of the shift register. The L^{th} register is a register corresponding to the highest power term of the pre-transformed encoding polynomial, and L is an integer greater than or equal to 1.

A length of the shift register is L, and L is generally equal to a highest power of the pre-transformed encoding polynomial. For example, if the highest power of the pre-transformed encoding polynomial is 1, L=1, and there is only one register. For another example, if the pre-transformed encoding polynomial is 1 + *D* + D³, and the highest power of the pre-transformed encoding polynomial is 3, L=3, and therefore there are three registers, where *D* corresponds to the first register, D³ corresponds to the third register, and it should be understood that D² corresponds to the second register. However, because a coefficient of D² in the pre-coding polynomial is 0, a tap corresponding to the second register does not exist. A tap (for example, a read-out tap and/or a write-in tap) corresponding to the shift register is described in the following embodiments with respect to a specific structure of the shift register. In pseudocode provided in the following embodiments, it is assumed that the highest power of the pre-transformed encoding polynomial is L, and therefore there are L shift register. *y*₀ indicates a value in the first register, and *y*₁ indicates a value in the second register. By analogy, *y*_{*L*-1} indicates a value in the L^{th} register.

In addition, the shift register correspond to at least two taps. When the at least two taps are two taps, the at least two taps needs to be taps respectively corresponding to a lowest power term and a highest power term.

In embodiments of this application, L is a prime number. In an example, L is equal to 5 or 7. If L is equal to 7, a quantity of taps (feedforward taps or feedback taps) corresponding to the shift register does not exceed 5. If L is equal to 5, a quantity of taps (feedforward taps or feedback taps) corresponding to the shift register does not exceed 3. It should be understood that, if the shift register are of a type with both feedforward and feedback, when L is equal to 7, a quantity of feedforward taps and a quantity of feedback taps do not exceed 5 respectively; or if L is equal to 5, a quantity of feedforward taps and a quantity of feedback taps do not exceed 3 respectively. A value of L and a quantity of taps are designed to balance pre-transformed encoding complexity and decoding performance. Description of the quantity of taps is also applicable to the following embodiments, and is not described again in the following.

In addition, the dynamic frozen bit may be a check bit.

In the method 300, the at least two taps corresponding to the shift register may correspond to one pre-transformed encoding polynomial, for example, a feedforward polynomial or a feedback polynomial; or the at least two taps correspond to two pre-transformed encoding polynomials, for example, a feedforward polynomial and a feedback polynomial. The following provides descriptions with reference to specific examples.

In addition, in this embodiment of this application, a shift direction of the shift register may be left shift or right shift. This is not limited. In the following embodiments, the right shift is used as an example for description.

In this embodiment of this application, a poly polynomial is used as an example of a pre-transformed encoding polynomial, and a most significant bit (most significant bit, MSB) of the poly polynomial is on a right side (right hand side, RHS) of the polynomial, namely, poly MSB RHS. Alternatively, the poly polynomial may have a most significant bit on a leftmost (left hand side, RHS), namely, poly MSB LHS. In the following embodiments, poly MSB RHS is used as an example for description.

### Example 1

### Feedforward+poly MSB RHS+right shift+write-in from a tap

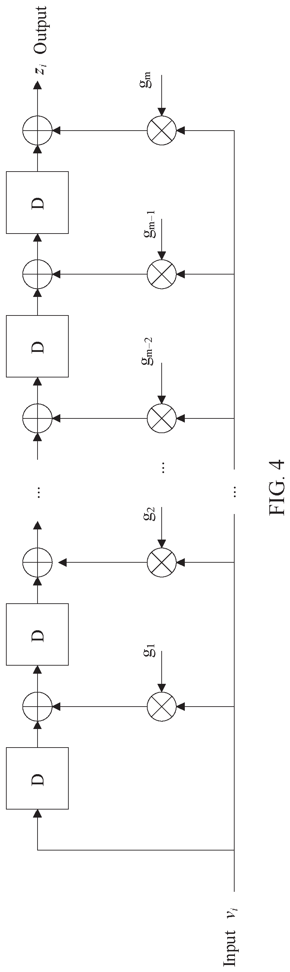

FIG. 4 is a diagram for feedforward poly MSB RHS, right shift, and pre-transformed encoding, that writes from a tap, which is output as a non-systematic code.

A pre-transformed input sequence (which is briefly described as an input sequence in this embodiment) is a to-be-encoded message sequence *v*₀, *v*₁, *v*₂, ... , *v*_{*K*-1}, an output sequence is *u*₀, *u*₁, *u*₂, ... , *u*_{*N*-1}, N is a length of a mother code of a polar code, and a relationship between an input sequence and an output sequence is determined based on shift register and a pre-transformed encoding polynomial.

As shown in FIG. 4, in this example, a structure of the pre-transformed encoding is a feedforward shift register, a quantity of registers is L, a tap position is determined based on a polynomial *g*(*D*) = 1 + *g*₁*D* + *g*₂D²+...+*gₘ*D*^{m}*, and a tap direction is write-in. A quantity L of shift register is generally equal to a highest power of the polynomial *g*(*D*). For example, in a polynomial *g*(*D*) = 1 + *D* + D³, polynomial coefficients are *g*₀ = 1, *g*₁ = 1, *g*₂ = 0, and *g*₃ = 1, a highest power m=3, and a corresponding quantity L of registers is also equal to 3.

In terms of time sequence, *g*₀ corresponds to a tap at a current moment, *g*₁ corresponds to a tap at one moment before the current moment, that is, one moment after a register is passed; *g*₂ corresponds to a tap at two moments before the current moment, that is, a moment after two registers are passed; and similarly, *gₘ* corresponds to a tap at a moment after m registers are passed. In a feedforward shift register, ⊕ represents an exclusive OR operation on a binary field, and ⊗ represents a binary switch. When a coefficient *gᵢ* of the polynomial *g*(*D*) is 0, ⊗ is disabled, and represents that there is no tap at an i^{th} moment; otherwise, ⊗ is enabled, and represents that there is a tap at the i^{th} moment.

FIG. 4 shows a structure in which pre-transformed encoding uses a non-systematic code. It may be learned that if the pre-transformed encoding uses a non-systematic code, an output of shift register is not related to a set to which current positions in an input sequence of the shift register. Specifically, regardless of whether a current position belongs to a message bit set or a dynamic frozen bit set, the output of the shift register is read from an end register of a shift direction of the shift register.

As described above, a length of the shift register is L. Therefore, the end register in the shift direction is the L^{th} register. Therefore, if the current position in the input sequence corresponds to the message bit set or the dynamic frozen bit set, the output of the shift register is related to a value in the L^{th} register in the shift direction of the shift register. A value in the L^{th} register is obtained by right shifting values in a first register to an (L-1)^{th} register. In addition, if a current position in the input sequence corresponds to a frozen bit, the output of the shift register is 0.

If the pre-transformed encoding uses a non-systematic code, although decoding complexity of the shift register is slightly higher, the output of the shift register is more unified, and description complexity is lower.

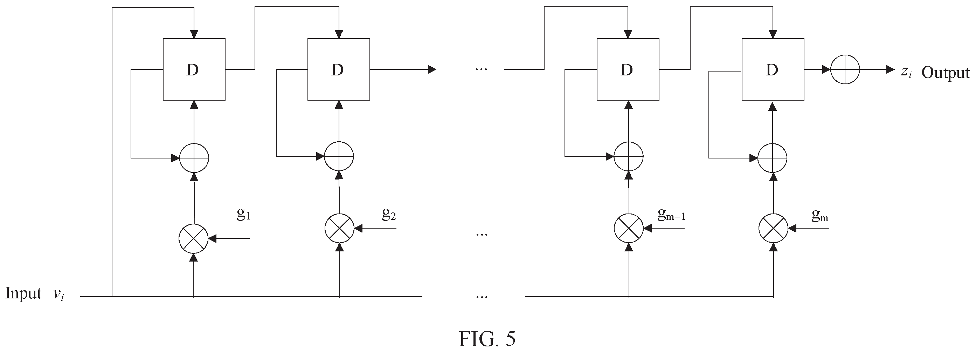

Another structure equivalent to the pre-transformed encoding structure in FIG. 4 is shown in FIG. 5. FIG. 5 is another diagram for feedforward poly MSB RHS, right shift, and pre-transformed encoding, that writes from a tap, which is output as a non-systematic code. It should be understood that the pre-transformed encoding processes shown in FIG. 5 and FIG. 4 are essentially equivalent, and details are not described again.

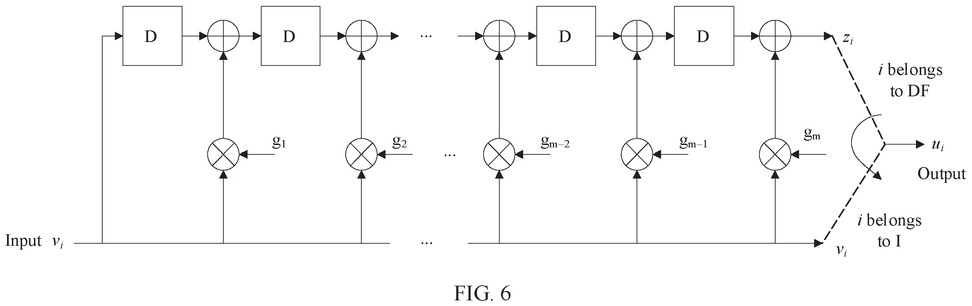

FIG. 6 is a diagram for feedforward poly MSB RHS, right shift, and pre-transformed encoding, that writes from a tap, which is output as a systematic code.

If the pre-transformed encoding uses a systematic code, an output of shift register is related to a set to which current positions in an input sequence of the shift register. Specifically, if the current position belongs to the message bit set, the output of the shift register is an input of the current position; or if the current position belongs to the dynamic frozen bit set, the output of the shift register is read from the end register of the shift direction of the shift register.

Before the encoding starts, values in the L shift register need to be initialized. For example, a value of each register is initialized to 0.

When the pre-transformed encoding uses a non-systematic code or a systematic code, if a frozen bit is at the current position of the input sequence (for example, a position of puncturing and shortening), the output of the shift register is 0.

In Example 1, in the case of a non-systematic code, a pseudocode is expressed as follows:

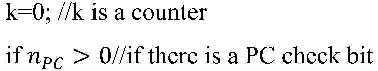

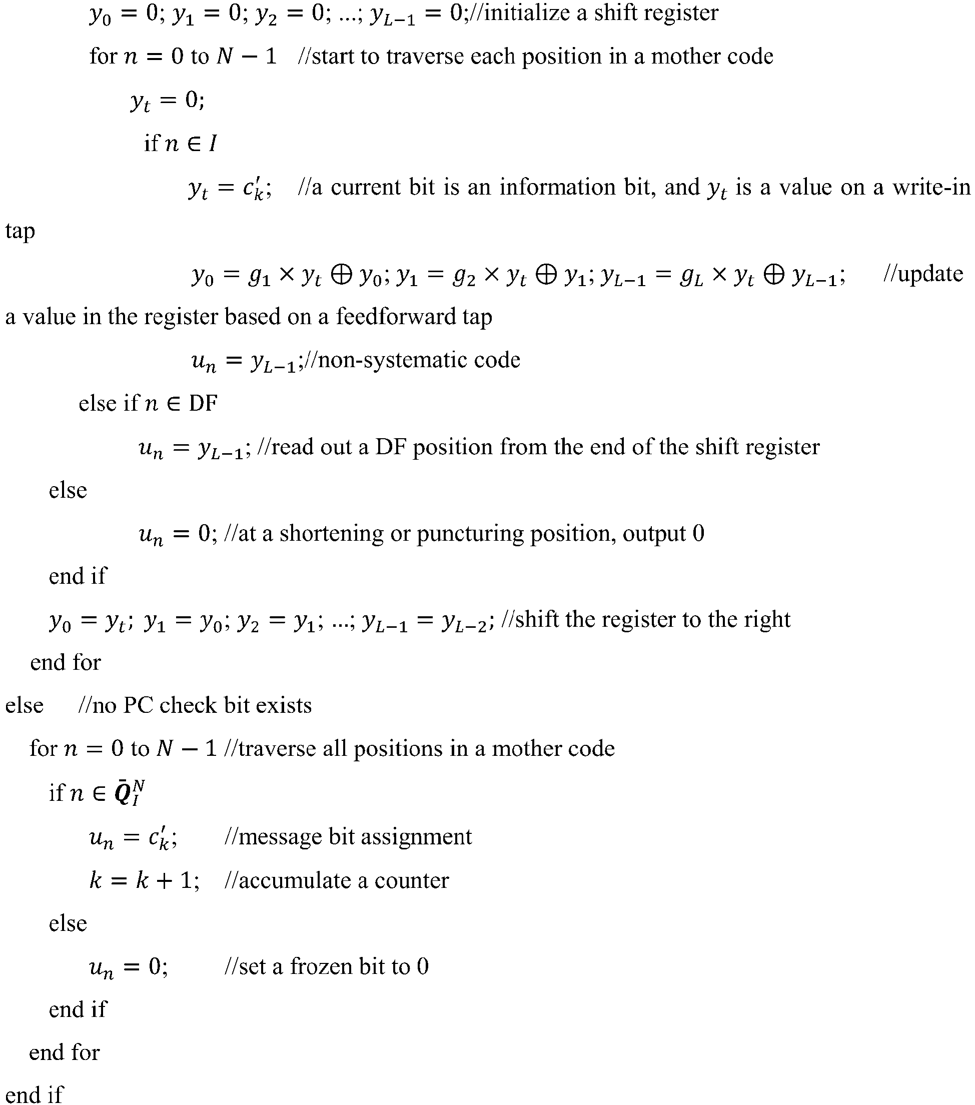

In Example 1, in the case of a systematic code, a pseudocode is expressed as follows:

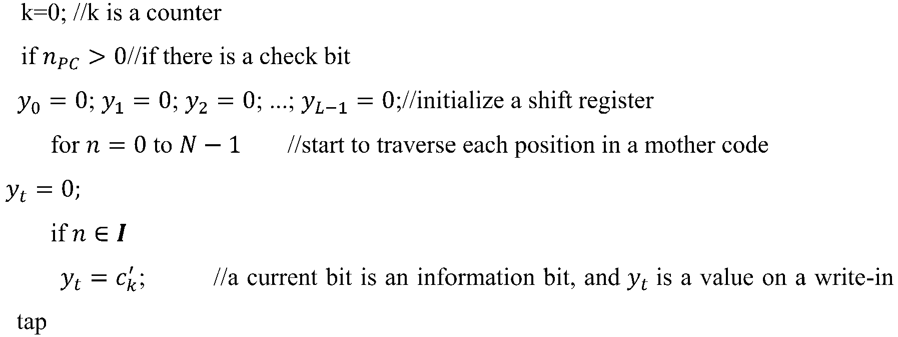

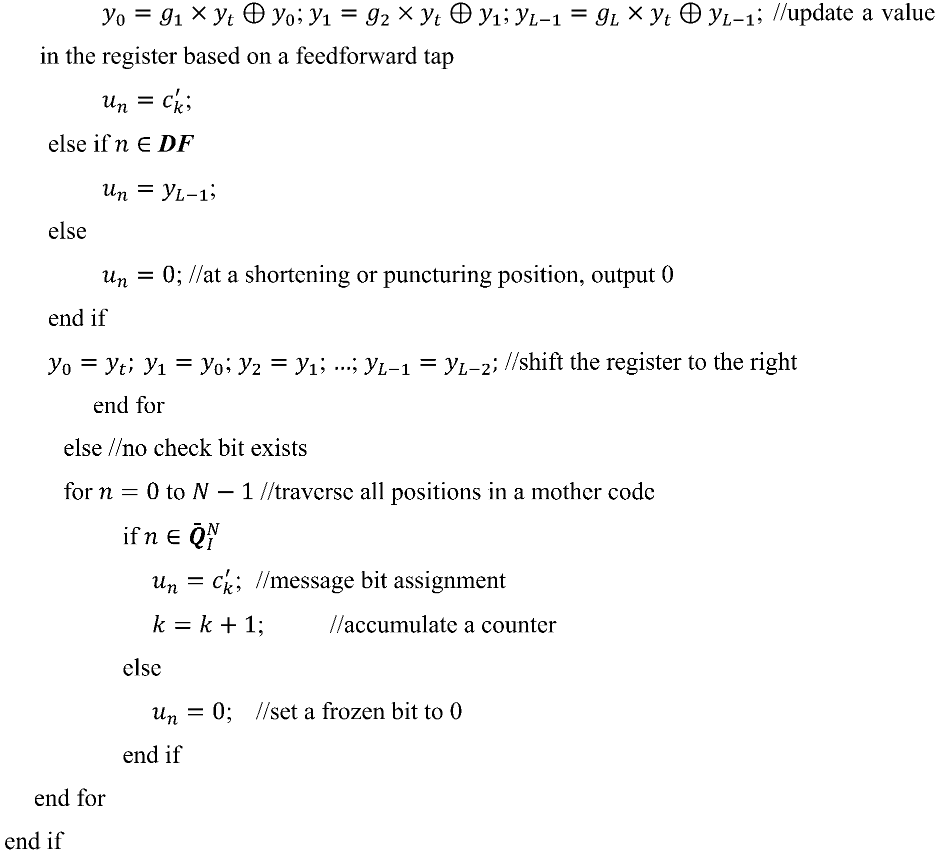

It may be learned from the foregoing pseudocode that, in Example 1, if a current position in the input sequence corresponds to a message bit, a value in a first register in the shift register is updated to an exclusive OR value of the value in the first register and a value of a first tap corresponding to the first register. The value of the first tap is an input of the shift register. In a feedforward manner of Example 1, the input of the shift register is also a message bit at the current position. Herein, the first register may be any register in the shift registers.

In the pseudocode, a process of obtaining a message bit set I, a dynamic frozen (dynamic frozen, DF) bit set, and a position of a frozen bit (for example, puncturing or shortening) is as follows.
(1) A reliability sequence ${Q}_{0}^{N - 1}$ of a mother code length is obtained, rate matching is performed, and a puncturing position and/or a shortening position are/is removed from ${Q}_{0}^{N - 1}$ to obtain a reliability sequence ${\overline{Q}}_{I , tmp}^{N}$ obtained after the rate matching, where a length of ${\overline{Q}}_{I , tmp}^{N}$ is N minus a quantity of punctured bits and/or shortened bits.

For example, the mother code length N=32, and ${Q}_{0}^{N - 1} = \left\{1, 2, 3, 4, 5, 6, 7, 8, 9, 17, 10,\right.$ $\left.18, 11, 18, 13, 21, 25, 12, 20, 14, 15, 22, 27, 26, 23, 29, 16, 24, 28, 30, 31, 32\right\}$. Two bits need to be punctured for rate matching, and a reliability sequence ${\overline{Q}}_{I , tmp}^{N} = \left\{3, 4, 5, 6, 7, 8, 9, 17, 10, 18,\right.$ $\left.11, 18, 13, 21, 25, 12, 20, 14, 15, 22, 27, 26, 23, 29, 16, 24, 28, 30, 31, 32\right\}$ whose length is 30 is obtained after puncturing.

(2) In the sequence ${\overline{Q}}_{I , tmp}^{N} , K + {n}_{PC}^{wm}$ positions with the highest reliability are selected as a set ${\overline{Q}}_{I}^{N} . \left|{\overline{Q}}_{I}^{N}\right| = K + {n}_{PC}^{wm}$. *K* represents an information bit length. ${n}_{PC}^{wm}$ is a construction parameter required for selecting a message bit, and represents a quantity of bits that sacrifice reliability when the message bit is selected, or a quantity of bits that are pre-frozen.

For example, K=11, ${n}_{PC}^{wm} = 4$, and $K + {n}_{PC}^{wm} = 11 + 4 = 15$ positions with highest reliability are selected from the reliability sequence ${\overline{Q}}_{I , tmp}^{N}$, to obtain a set ${\overline{Q}}_{I}^{N} = \left\{12, 20, 14, 15, 22, 27, 26, 23, 29, 16, 24, 28, 30, 31, 32\right\}$ .

(3) Remaining positions in the sequence ${\overline{Q}}_{I , tmp}^{N}$ form a frozen bit set F.

For example, the frozen bit set F={3, 4, 5, 6, 7, 8, 9, 17, 10, 18, 11, 19, 13, 21, 25} having a length of 15.

(4) A minimum row weight in the set ${\overline{Q}}_{I}^{N}$ is calculated, and is denoted as *wₘᵢₙ*, and then a maximum of ${n}_{PC}^{wm}$ positions whose row weights are equal to *wₘᵢₙ* are sequentially frozen in descending order of reliability in the set ${\overline{Q}}_{I}^{N}$. If a position whose row weight is equal to *wₘᵢₙ* in the set ${\overline{Q}}_{I}^{N}$ is less than ${n}_{PC}^{wm}$, pre-freezing continues to be performed at a position whose row weight is equal to 2*wₘᵢₙ*, until ${n}_{PC}^{wm}$ positions in the set ${\overline{Q}}_{I}^{N}$ are pre-frozen and are used as PC bits.

For example, a minimum row weight of ${\overline{Q}}_{I}^{N}$ is 8, and positions whose row weights in ${\overline{Q}}_{I}^{N}$ are 8 and that have highest reliability are {27, 26, 23, 29}, in other words, a PC position set is {23, 26, 27, 29} having a length of 4.

(5) A dynamic frozen bit set DF is obtained, where the set DF is a set formed by the set F and the PC positions.

The set DF={3, 4, 5, 6, 7, 8, 9, 10, 11, 13, 17, 18, 19, 21, 23, 25, 26, 27, 29} having a length of 19.

(6) The message bit set I is obtained, where the message bit set is a set obtained after the set DF is removed from the set ${\overline{Q}}_{I , tmp}^{N}$, and a size of the message bit set is *K.*

I={12, 20, 14, 15, 22, 16, 24, 28, 30, 31, 32}.

A process of obtaining the message bit set I, the dynamic frozen bit set DF, and the frozen bit set DF that are provided herein is applicable to another embodiment below, and is not described in the following again.

In Example 1, a type of the shift register is a feedforward type, a feedforward manner is multi-tap writing, a quantity of taps (or feedforward taps) is greater than or equal to 1, and an output of the shift register is at an end of a shift direction of the shift register.

In addition, as described in Example 1, a rule of how to output bits by using shift register is not limited in this example. For example, when a current position is a message position and a dynamic frozen position, the bits may be read from the shift register (when a non-systematic code is obtained after pre-transformed encoding), or may be read from a register only when a current position is a dynamic frozen position (when pre-transformed encoding uses a systematic code). Therefore, a codeword obtained after the pre-transformed encoding may be a systematic code or a non-systematic code. In the following example, a non-systematic code is used as an example for description.

### Example 2

### Feedback+poly MSB RHS+right shift+write-in from a tap

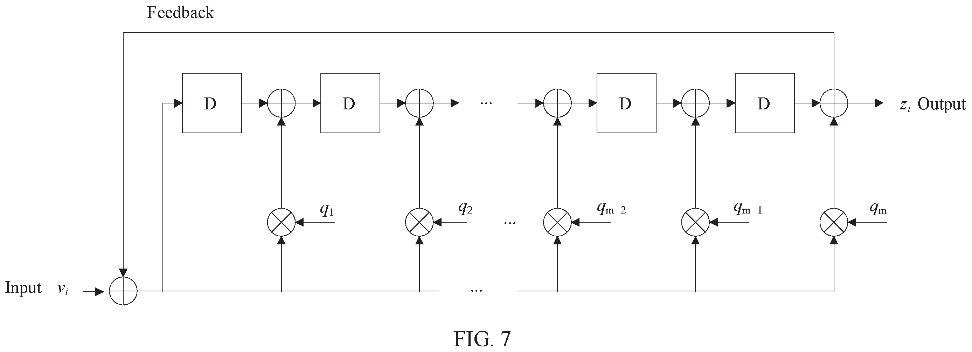

FIG. 7 is a diagram of multi-tap shift register with feedback.

In this example, an input sequence of pre-transformed encoding is a to-be-encoded message sequence *v*₀, *v*₁, *v*₂, ... , *v*_{*K*-1}, an output sequence is *u*₀, *u*₁, *u*₂, ... , *u*_{*N*-1}, N is a length of a mother code of a polar code, and a relationship between an input sequence and an output sequence is determined based on shift register and a polynomial. A structure of the pre-transformed encoding is shift register with feedback, a quantity of registers is L, a tap position is determined based on a polynomial *q*(*D*) = 1 *+ q*₁*D* + *q*₂D²+...+*qₘ*D*^{m}*, and a tap direction is write-in. A quantity L of shift register is generally equal to a highest power of the polynomial *q(D).* For example, in a polynomial *q*(*D*) = 1 + D² + D³, polynomial coefficients are *q*₀ = 1, *q*₁ = 0, *q*₂ = 1, and *q*₃ = 1, a highest power m=3, and a corresponding quantity L of registers is also equal to 3.

In terms of time sequence, *q*₀ corresponds to a tap at a current moment, *q*₁ corresponds to a tap at one moment before the current moment; *q*₂ corresponds to a tap at two moments before the current moment; and similarly, *qₘ* corresponds to a tap at a moment after m registers are passed. In a shift register, ⊕ represents an exclusive OR operation on a binary field, and ⊗ represents a binary switch. When a coefficient *qᵢ* of the polynomial *q*(*D*) is 0, ⊗ is disabled, and represents that there is no tap at an i^{th} moment; otherwise, ⊗ is enabled, and represents that there is a tap at the i^{th} moment.

In Example 2, a parameter ${n}_{PC}^{wm}$ is used in a process of obtaining the message bit set I, the dynamic frozen bit set DF, and a position of a frozen bit (for example, shortening or puncturing). For a specific value of the parameter ${n}_{PC}^{wm}$ in Example 2, refer to one or more groups of values shown in Table 1.

The following further provides a pre-transformed encoding polynomial in Example 2. The pre-transformed encoding polynomial may be given in a form of Table 2.

Table 1 and Table 2 relate to a parameter E, indicating a sending code length, and is a code length obtained after rate matching. Specifically, a length of a to-be-decoded sequence that is sent by the encoding device and that is obtained in a decoding device by using a wireless transmission environment after an operation such as polar encoding, rate matching, modulation, or frequency conversion is performed on a message bit. In Table 1 or Table 2, "-1" indicates that a case corresponding to E is meaningless for current K. If the pre-transformed encoding polynomial is 0, it indicates that no pre-transformed encoding operation is performed.

The following Table 1 and Table 2 describe or store, in a table form, a plurality of correspondences between ${n}_{PC}^{wm}$ and pre-transformed encoding polynomials under different K and E. It may be understood that in specific implementation, there may be another description or storage form, or not all the correspondences are required. In an implementation, one or more correspondences in Table 1 or Table 2 may be included. For example, a correspondence in the first 16 rows in Table 1 is included.

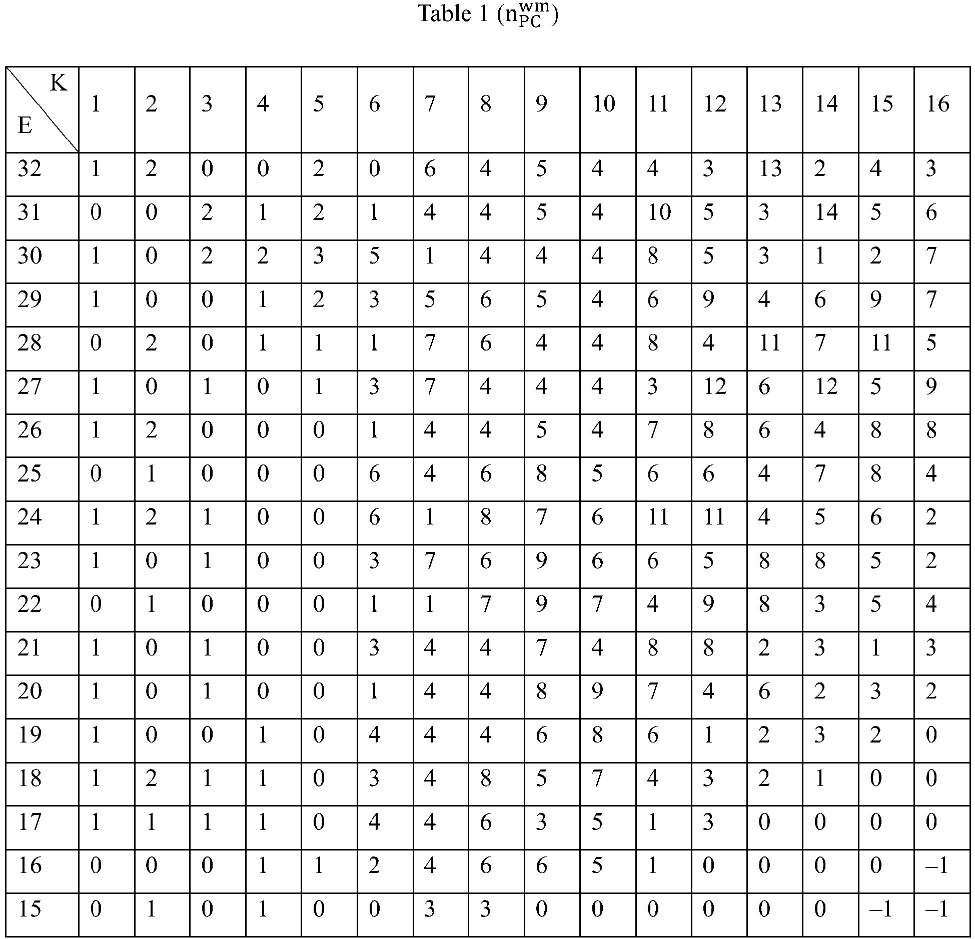

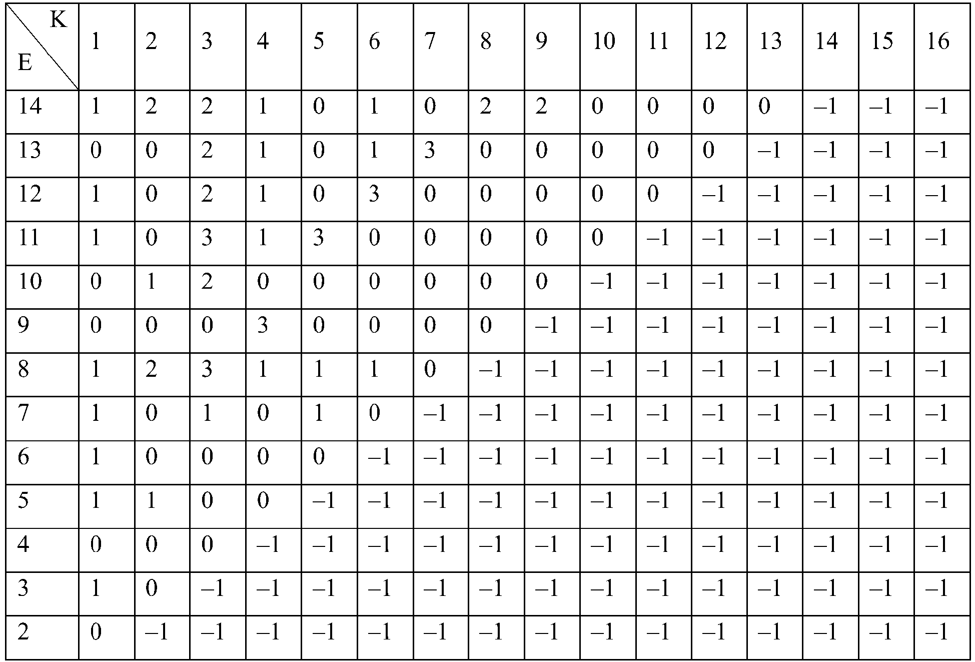

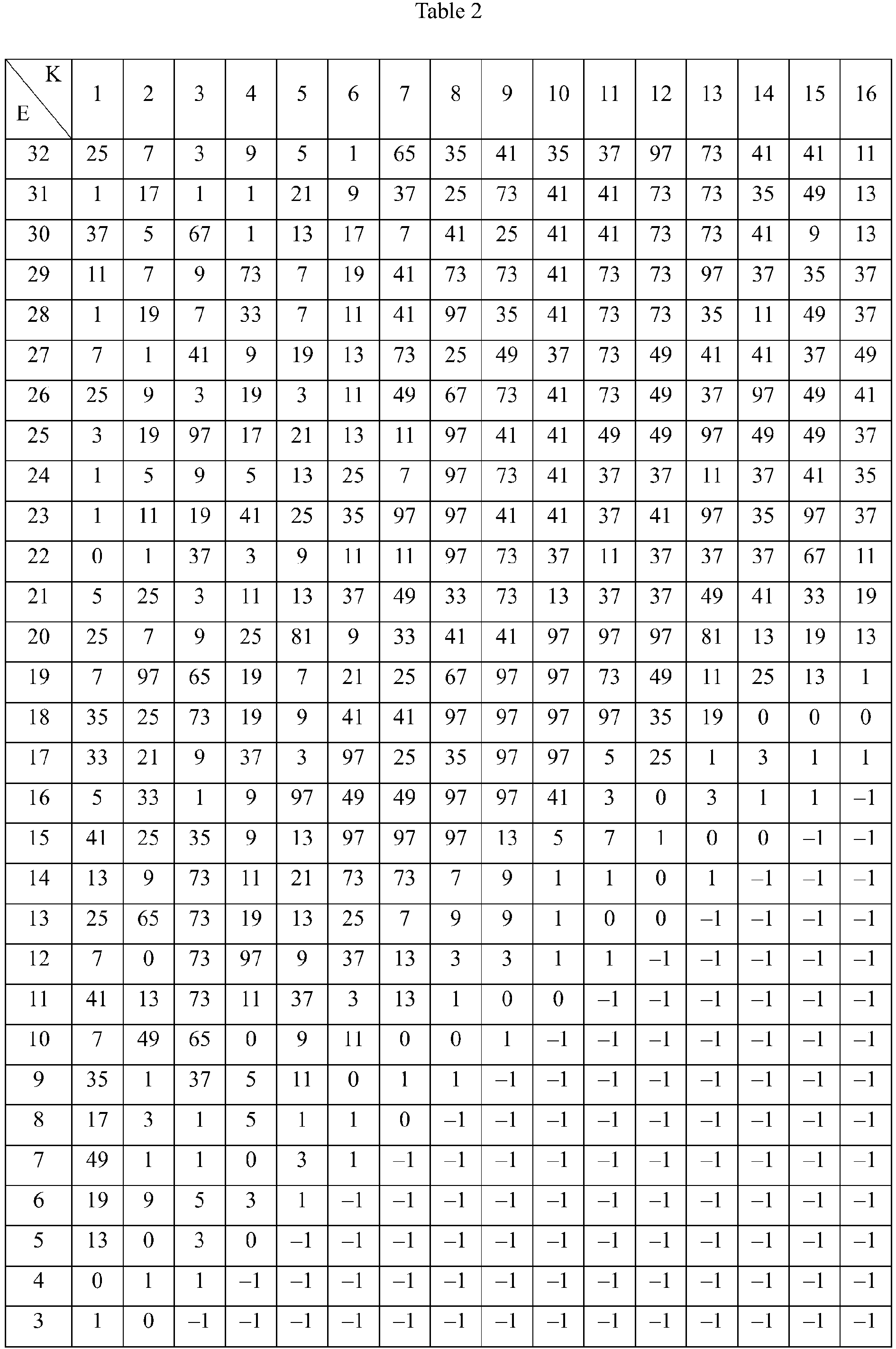

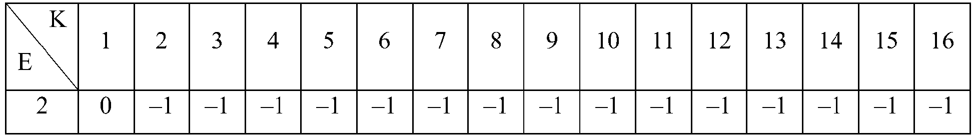

Table 1 shows that a value of K ranges from 1 to 16. Because a code rate R=K/E is usually less than 1, a value of E is usually greater than K. In addition, if a length of a mother code is 32, the value of E is less than or equal to 32. In practice, considering a case in which rate matching is repeated, the value of E may also be greater than 32. However, the length of the mother code corresponding to E having an ultra-short code is less than or equal to 32. Therefore, in this application, an example in which the value of E is K+1 to 32 (the value of E is 2 to 32) is used. Table 1 provides a PC polynomial corresponding to the value of K being 1 to 16, and the value of E being 2 to 32.

Values of taps *q*₀ to *qₘ* in FIG. 7 of Example 2 are determined based on the PC polynomial. A specific method is as follows: PC poly is converted from a decimal sequence to a binary sequence, *qₘ* is on the rightmost, *q*₀ is on the leftmost, and the values of *q*₀ to *qₘ* are taken to determine a tap switch. For example, PC poly=97, and has a corresponding binary sequence [1000011] that is q₆=1, q₅=1, q₄=0, q₃=0, q₂=0, q₁=0, and q₀=1 from a highest bit to a lowest bit.

Herein, q₄ to q₁ are all zero, indicating that there is no write-in tap at moments corresponding to q₄ to q₁. However, there is a write-in tap at a current moment corresponding to q₀ and the moments corresponding to q₆ to q₅. Therefore, at moments corresponding to coefficients equal to 1, a value on the write-in tap and a value in a corresponding register are exclusive-ORed and then written into the register.

PC poly=97 is one of polynomials that are selected based on the technical solutions of this application and that appear relatively frequently in a plurality of PC polynomials. Considering that a limited quantity of PC polynomials are compatible with various cases, PC poly=97 may be used as a PC polynomial.

In an implementation, the pre-transformed encoding in Example 2 uses a non-systematic code, as shown in FIG. 7. If the pre-transformed encoding uses a non-systematic code, an output of shift register is not related to a set to which current positions in an input sequence of the shift register. Specifically, regardless of whether a current position belongs to a message bit set or a dynamic frozen bit set, the output of the shift register is read from an end register of a shift direction of the shift register. The end register is an L^{th} register in the shift direction. In addition, in Example 2, because feedback is introduced, the value in the L^{th} register is related to message bits located before the current position in the input sequence.

In another implementation, the pre-transformed encoding in Example 2 may use a systematic code. If the pre-transformed encoding uses a systematic code, the output of the shift register is related to a set to which a current position in the input sequence belongs. Specifically, if the current position corresponds to a message bit, the output of the shift register is the input of the shift register, that is, the output of the shift register is a message bit at the current position; or if the current position corresponds to a frozen bit, the output of the shift register is 0.

A pseudocode of Example 2 is as follows:

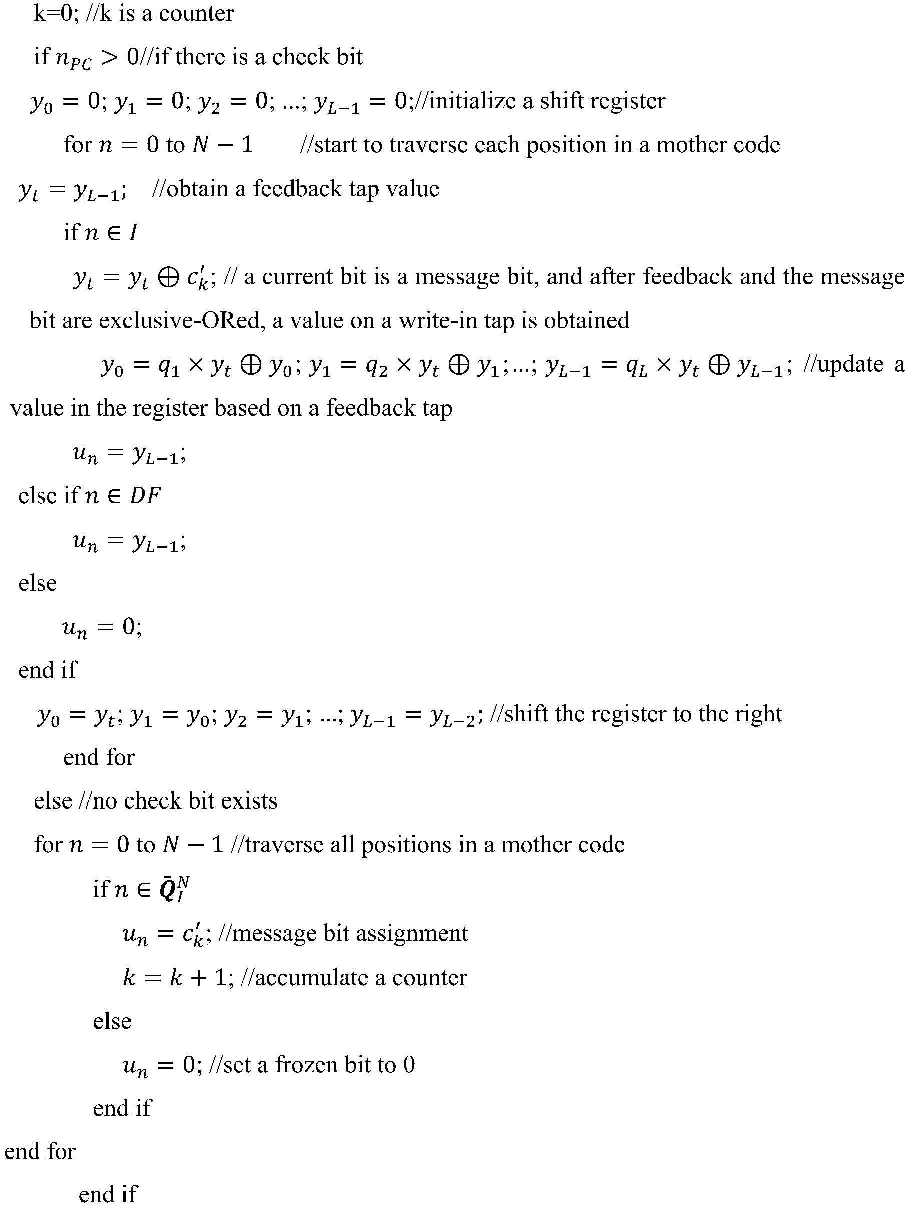

It may be learned from the foregoing pseudocode that, in Example 2, if a current position in the input sequence corresponds to a message bit, a value in a first register in the shift register is updated to an exclusive OR value of the value in the first register and a value of a first tap corresponding to the first register. The value of the first tap is an exclusive OR value of a feedback input of the shift register and a message bit at the current position. The first register may be any register in the shift register. The first tap corresponds to any write-in tap in FIG. 7 (a structure of the shift register is shown by using *q*₀=1 in FIG. 7). For example, *q*₀ to *qₘ* each correspond to one write-in tap (because *q*₀=1, a tap corresponding to *q*₀ is not shown in FIG. 7 in a binary switch manner, which is equivalent to there being a write-in tap at the current moment corresponding to *q*₀). It may be learned from examples in Table 1 and Table 2 that coefficients of some terms of the pre-transformed encoding polynomial may be zero, and a coefficient that is zero indicates that no write-in tap exists at a moment corresponding to the coefficient. For example, in the foregoing example in which PC poly=97, poly RHS is used as an example, *qₘ* is on the rightmost, and *q*₀ is on the leftmost. Therefore, a binary sequence corresponding to 97 is [1000011] that is q₆=1, q₅=1, q₄=0, q₃=0, q₂=0, q₁=0, q₀=1. It may be learned that, q₄ to q₁ are all zero. Therefore, there is no write-in tap at moments corresponding to q₄ to q₁.

It may be learned that a type of the shift register in Example 2 is feedback, a feedback manner is multi-tap writing, a quantity of feedback taps is greater than or equal to 1, and the output of the shift register is on the rightmost of the shift direction of the shift register, for example, an exclusive OR value of a value of the end register and the feedback input shown in FIG. 7. Compared with Example 1, a register in Example 2 has a larger memory length (memory length), and is used as a code spectrum obtained after the pre-transformed encoding and the polar code are concatenated to improve performance.

In Example 1 and Example 2 above, at least two taps corresponding to the shift register come from a tap group, and the taps correspond to one pre-transformed encoding polynomial, such as the feedforward polynomial *g*(*D*) in Example 1 or the feedback polynomial *q*(*D*) in Example 2.

This application further provides an example in which the at least two taps corresponding to the shift register are from two tap groups, so that code spectrum performance may also be improved.

In an example relating to two tap groups, a direction of a tap in at least one of the two tap groups is write-in. For example, a direction of a tap in one of the two tap groups is write-in, or directions of taps in both of the two groups are write-in. The two tap groups include a first tap group and a second tap group. A position of a tap in the first tap group is determined by a first pre-transformed encoding polynomial, and a position of a tap in the second tap group is determined by a second pre-transformed encoding polynomial. In addition, a coefficient of a lowest power term and a coefficient of a highest power term of each of the first pre-transformed encoding polynomial and the second pre-transformed encoding polynomial are 1.

The following describes implementation of the two tap groups with reference to some specific examples.

### Example 3

### Feedforward write-in from tap+feedback read-out from tap+poly MSB RHS+right shift

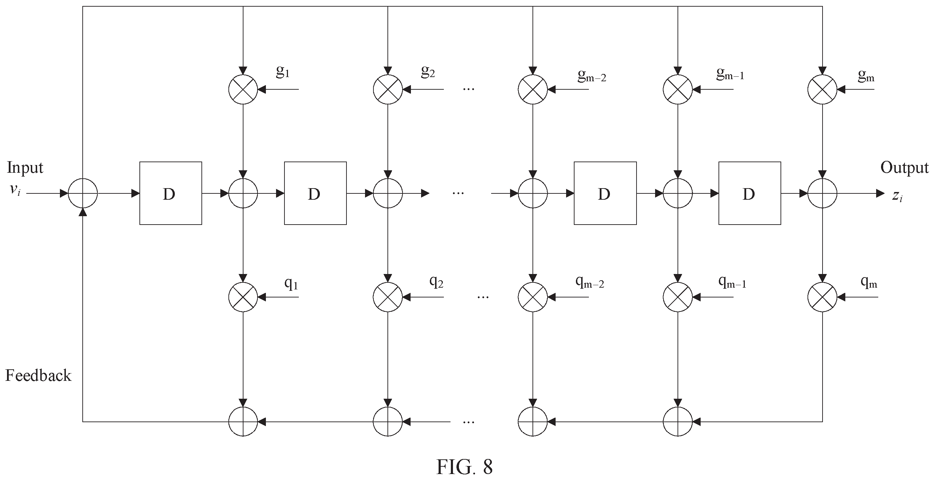

FIG. 8 is a diagram for shift register for which a feedforward tap is for writing and a feedback tap is for reading. As shown in FIG. 8, a direction of a tap in the first tap group is write-in, and a direction of a tap in the second tap group is read-out. The tap in the first tap group is a feedforward tap, and a position of the feedforward tap is determined by using the first pre-transformed encoding polynomial *g*(*D*) = 1 + *g*₁*D* + *g*₂D²+...+*gₘ*D*^{m}*. In this example, the first pre-transformed encoding polynomial may also be referred to as a feedforward polynomial. The tap in the second tap group is a feedback tap, and a position of the feedback tap is determined by using the second pre-transformed encoding polynomial *q*(*D*) = 1 *+ q*₁*D + q*₂D²+...+*qₘ*D*^{m}*.

It may be learned that a structure of the pre-transformed encoding is shift register with a feedback tap and a feedforward tap. In this example, the length L of the shift register may be equal to a maximum value of a power of the feedforward polynomial *g*(*D*) and the feedback polynomial q(*D*). For example, the feedback polynomial *q(D)* = 1 + D² + D³, polynomial coefficients are separately *q*₀ = 1, *q*₁ = 0, *q*₂ = 1, and *q*₃ = 1, and a highest power of the polynomial is 3; the feedforward polynomial *g*(*D*) = 1 + *D* + D⁵, polynomial coefficients are separately *g*₀ = 1, *g*₁ = 1, *g*₂ = 0, *g*₃ = 0, *g*₄ = 0, and *g*₅ = 1, a highest power of the polynomial is 5, and the length of the shift register is L=5.

In terms of time sequence, *q*₀ (or *g*₀) corresponds to a tap at a current moment, *q*₁ (or *g*₁) corresponds to a tap at one moment before the current moment; *q*₂ (or *g*₂) corresponds to a tap at two moments before the current moment; and similarly, *qₘ* (or *gₘ*) corresponds to a tap at a moment after m registers are passed. ⊕ in the shift register represents an exclusive OR operation on a binary field, and ⊗ is a binary switch. When a coefficient *qᵢ* of the polynomial *q*(*D*) = 1 + *q*₁*D* + *q*₂D²+...+*qₘ*D*^{m}* is 0, ⊗ is off (when there is no tap at an i^{th} moment); otherwise, ⊗ is on (when there is a tap at the i^{th} moment). A meaning of the polynomial *g*(*D*) is similar, and details are not described herein again.

Similarly, an input sequence of pre-transformed encoding is a to-be-encoded message sequence *v*₀, *v*₁, *v*₂, ... , *v*_{*K*-1}, an output sequence is *u*₀, *u*₁, *u*₂, ... , *u*_{*N*-1}, and N is a length of a mother code of a polar code. A relationship between the input sequence and the output sequence is determined based on the shift register, the feedback polynomial *q*(*D*), and the feedforward polynomial g(*D*).

Before the encoding starts, values in the L shift register need to be initialized. For example, a value of each register is initialized to 0.

In an implementation, the pre-transformed encoding uses a non-systematic code. In this case, an output of the shift register is not related to a set to which current positions in an input sequence of the shift register. Specifically, regardless of whether the current position belongs to a message bit, output is performed at a fixed position in the shift register, for example, output is performed at an end register in the shift direction of the shift register, as shown in FIG. 8, where *uᵢ*=*zᵢ.*

In another implementation, the pre-transformed encoding uses a systematic code. In this case, an output of the shift register is related to a set to which current positions in an input sequence of the shift register. For example, if the current position of the input sequence belongs to the message bit set, the output of the pre-transformed encoding is the input of the pre-transformed encoding, that is, *uᵢ*=*vᵢ*. If the current position of the input sequence belongs to the dynamic frozen bit set, a value is read from the end register in the shift direction of the shift register as the output of the pre-transformed encoding, that is, *uᵢ*=*zᵢ.*

For a non-systematic code or a systematic code, if a current position in the input sequence corresponds to a frozen bit, the output of the pre-transformed encoding is 0.

A pseudocode of Example 3 is as follows:

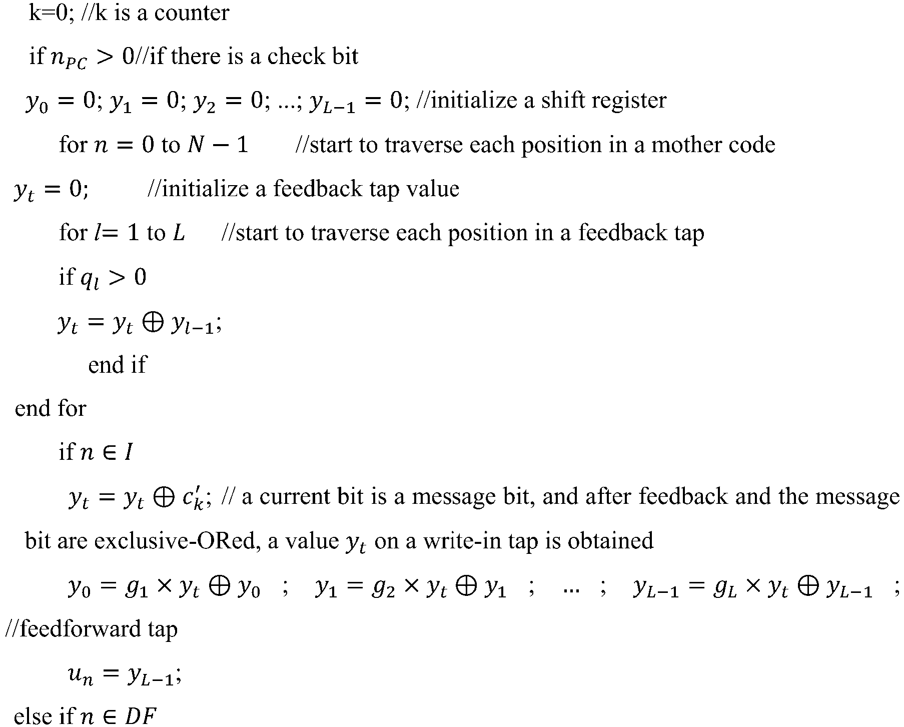

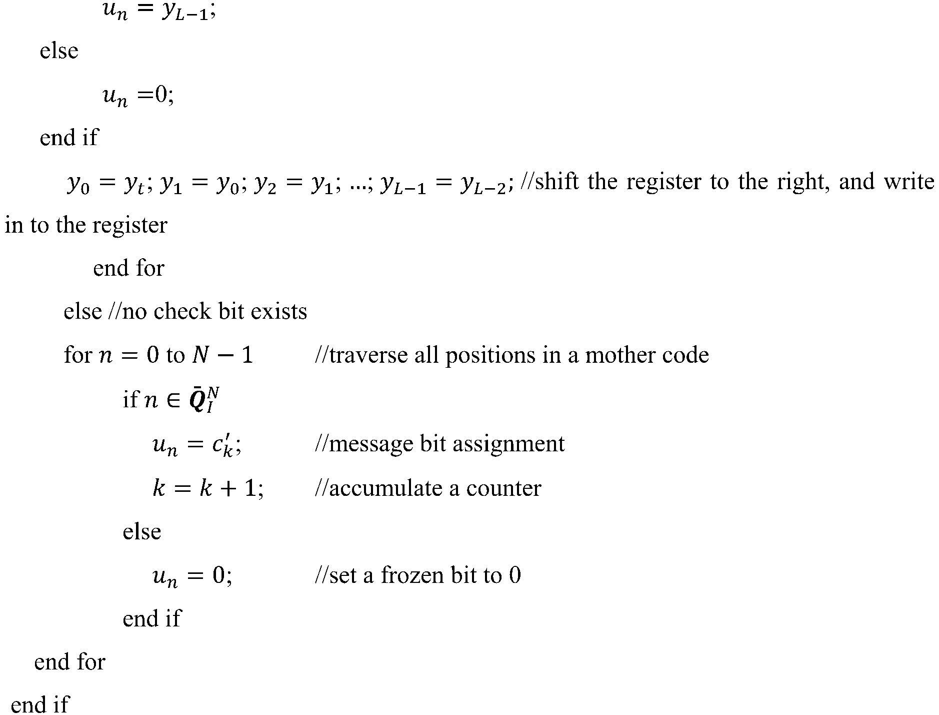

It can be learned from the pseudocode that, if a direction of a tap in the first tap group is write-in, a direction of a tap in the second tap group is read-out, and a current position in the input sequence corresponds to a message bit, a value in a first register in the shift register is updated to an exclusive OR value of the value in the first register and a value of a first tap corresponding to the first register. The value of the first tap is an exclusive OR value of a feedback input of the shift register and a message bit at the current position. A feedback input of the shift register is an exclusive OR value of a value of a tap corresponding to a power term whose coefficient is greater than 0 in the second pre-transformed encoding polynomial. The first register is any register in the shift register.

Compared with Example 2, in Example 3, feedforward is added based on feedback, a direction of a feedback tap in Example 2 is changed, and a memory length is larger. Therefore, a code spectrum improvement effect obtained after the pre-transformed encoding and the polar code are concatenated is better.

### Example 4

### Feedforward read-out from tap+feedback write-in from tap+poly MSB RHS+right shift

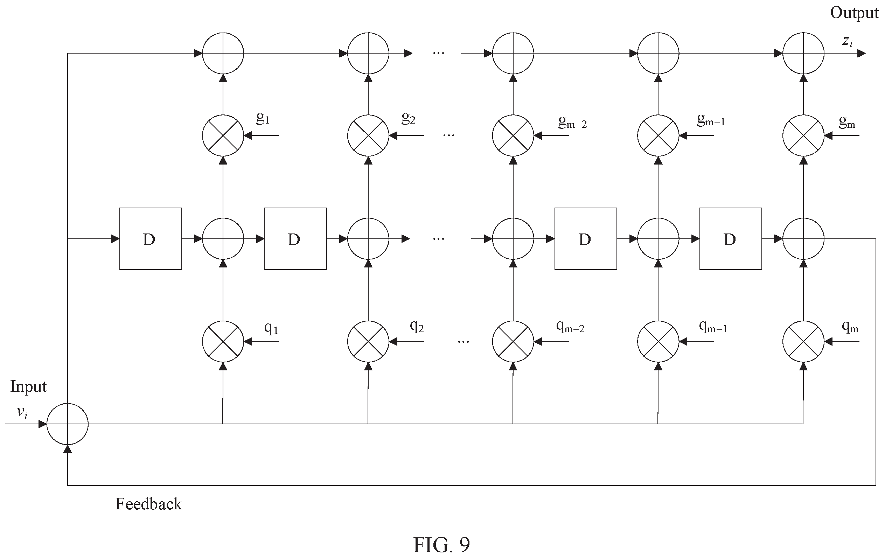

FIG. 9 is a diagram for shift register for which a feedforward tap is for reading and a feedback tap is for writing. As shown in FIG. 9, a direction of a tap in the first tap group is read-out, and a direction of a tap in the second tap group is write-in. The tap in the first tap group is a feedforward tap, and a position of the feedforward tap is determined by using the first pre-transformed encoding polynomial *g*(*D*) = 1 + *g*₁*D* + *g*₂D²+...+*gₘ*D*^{m}*. In this example, the first pre-transformed encoding polynomial may also be referred to as a feedforward polynomial. The tap in the second tap group is a feedback tap, and a position of the feedback tap is determined by using the second pre-transformed encoding polynomial *q*(*D*) = 1 *+ q*₁*D + q*₂D²+...+*qₘ*D*^{m}.* The second pre-transformed encoding polynomial may also be referred to as a feedback polynomial.

In this example, a structure of the pre-transformed encoding is shift register with a feedforward tap and a feedback tap. A length of the shift register is L, and L is equal to a maximum value of a power of the polynomial *g*(*D*) and the polynomial q(*D*).

In terms of time sequence, *q*₀ (or *g*₀) corresponds to a tap at a current moment, *q*₁ (or *g*₁) corresponds to a tap at one moment before the current moment; *q*₂ (or *g*₂) corresponds to a tap at two moments before the current moment; and similarly, *qₘ* (or *gₘ*) corresponds to a tap at a moment after m registers are passed. ⊕ in the shift register represents an exclusive OR operation on a binary field, and ⊗ is a binary switch. When a coefficient *qᵢ* of the polynomial *q(D) =* 1 + *q*₁*D* + *q*₂D²+...+*qₘ*D*^{m}* is 0, ⊗ is off (when there is no tap at an i^{th} moment); otherwise, ⊗ is on (when there is a tap at the i^{th} moment). A meaning of the polynomial *g*(*D*) is similar, and details are not described herein again.

In an implementation, the pre-transformed encoding uses a non-systematic code. If the current position of the input sequence corresponds to a message bit, the output of the shift register is related to the value of the tap in the first tap group (that is, the feedforward tap group). Specifically, the output of the shift register is an exclusive OR value of a value of a tap corresponding to a power term whose coefficient is greater than 0 in the first pre-transformed encoding polynomial.

In another implementation, the pre-transformed encoding uses a systematic code. For example, a current position in the input sequence corresponds to a message bit, and an output and a current position of the shift register are related. For example, if the current position of the input sequence belongs to the message bit set, the output of the shift register is the input of the shift register, that is, *uᵢ*=*vᵢ*.

In addition, for a non-systematic code or a systematic code, if the current position in the input sequence belongs to a frozen bit set, the output of the shift register is 0.

In Example 4, a value of a tap in the second tap group (that is, the feedback tap group) is an exclusive OR value of the input of the shift register and the feedback input of the shift register, and the feedback input is the value in the L^{th} register in the shift direction of the shift register.

A pseudocode of Example 4 may be as follows:

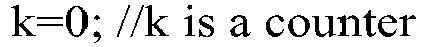

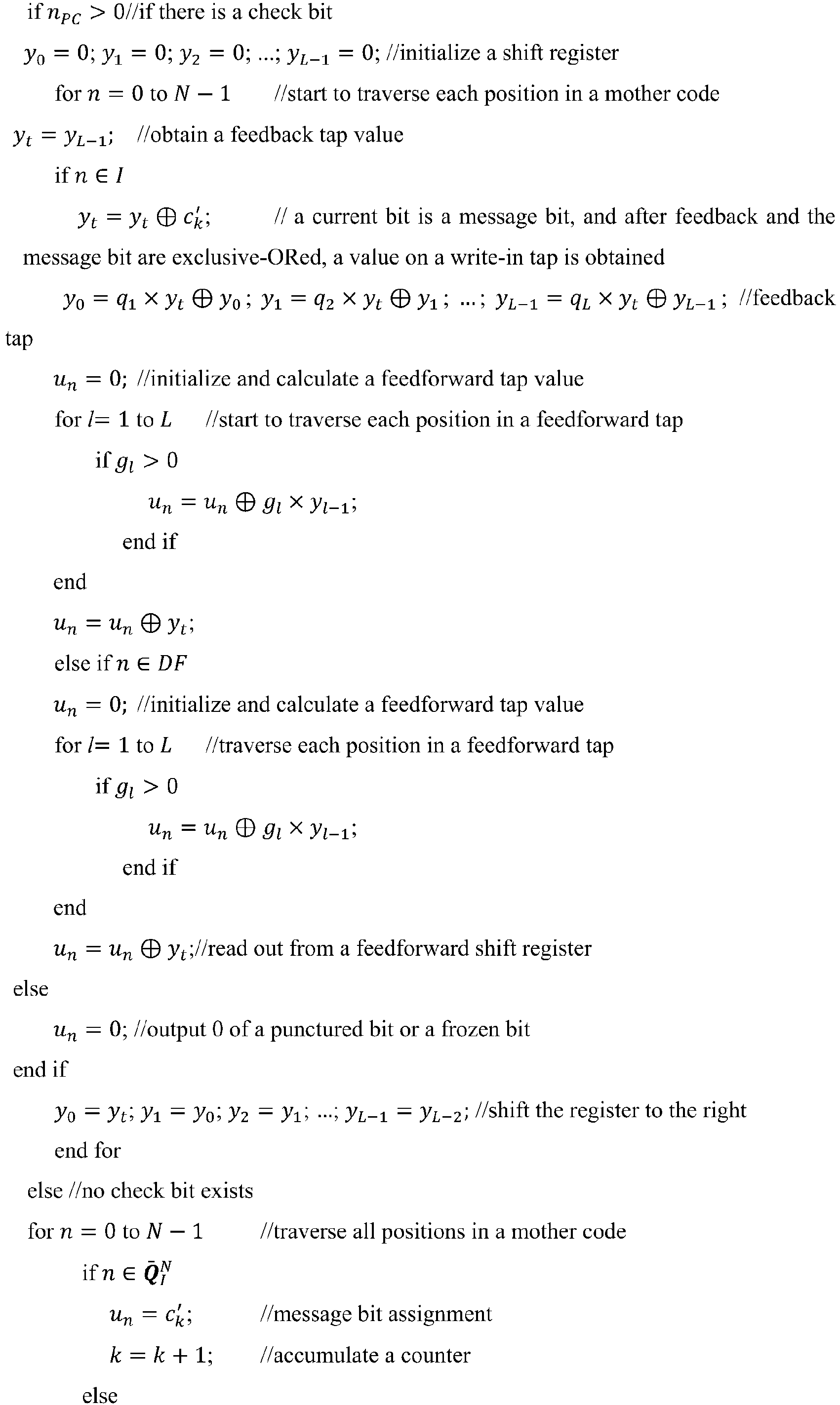

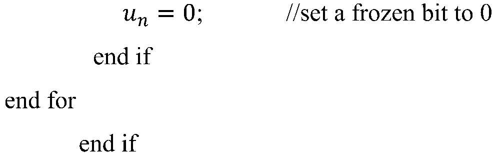

It may be learned from the foregoing pseudocode that, for the structure in Example 4, a direction of a tap in the first tap group is read-out, and a direction of a tap in the second tap group is write-in; and if the current position in the input sequence corresponds to a message bit, a value in a first register in the shift register is updated to an exclusive OR value of the value in the first register and a value of a first tap corresponding to the first register, the first tap belongs to the second tap group, and the first register is any register in the shift register.

A type of the register in Example 4 is feedforward+feedback. Compared with the feedforward manner in Example 3, in Example 4, multi-tap reading is performed, a feedback manner is multi-tap writing, and a quantity of feedforward taps or feedback taps is greater than or equal to 1.

Different from that the output of the pre-transformed encoding in Example 3 is related only to a value stored in one register in the shift register, the output of the pre-transformed encoding in Example 4 is related to values stored in a plurality of registers in the shift register. Therefore, a check capability is stronger.

### Example 5

### Feedforward write-in from tap+feedback write-in from tap+poly MSB RHS+right shift

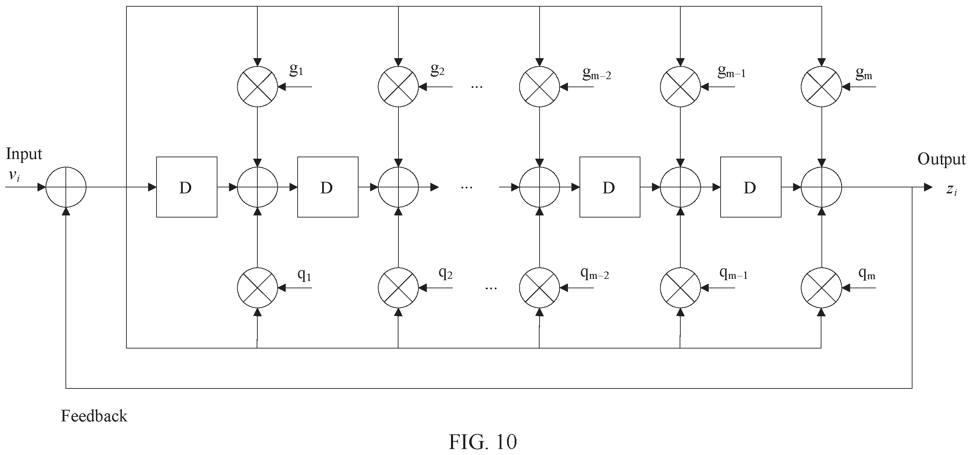

FIG. 10 shows shift register for which a feedforward tap and a feedback tap are both for writing. As shown in FIG. 10, directions of taps in the first tap group and the second tap group are both write-in. The tap in the first tap group is a feedforward tap, and a position of the feedforward tap is determined by using the first pre-transformed encoding polynomial *g*(*D*) = 1 + *g*₁*D* + *g*₂D²+...+*gₘ*D*^{m}.* In this example, the first pre-transformed encoding polynomial may also be referred to as a feedforward polynomial. The tap in the second tap group is a feedback tap, and a position of the feedback tap is determined by using the second pre-transformed encoding polynomial *q* (*D*) = *1 + q*₁*D* + *q*₂D² +...+ *qₘ*D*^{m}*. The second pre-transformed encoding polynomial may also be referred to as a feedback polynomial.

In this example, the pre-transformed encoding is based on shift register for which a feedforward tap and a feedback tap are both for writing. After the feedforward polynomial and the feedback polynomial are combined, an input bit and a feedback bit are exclusive-ORed and then written from a tap, and are read from the end register in the shift direction of the shift register.

For descriptions of the feedforward polynomial, the feedback polynomial, and the polynomial coefficient, refer to the descriptions in the foregoing other examples. Details are not described again.

A pseudocode of Example 5 may be as follows:

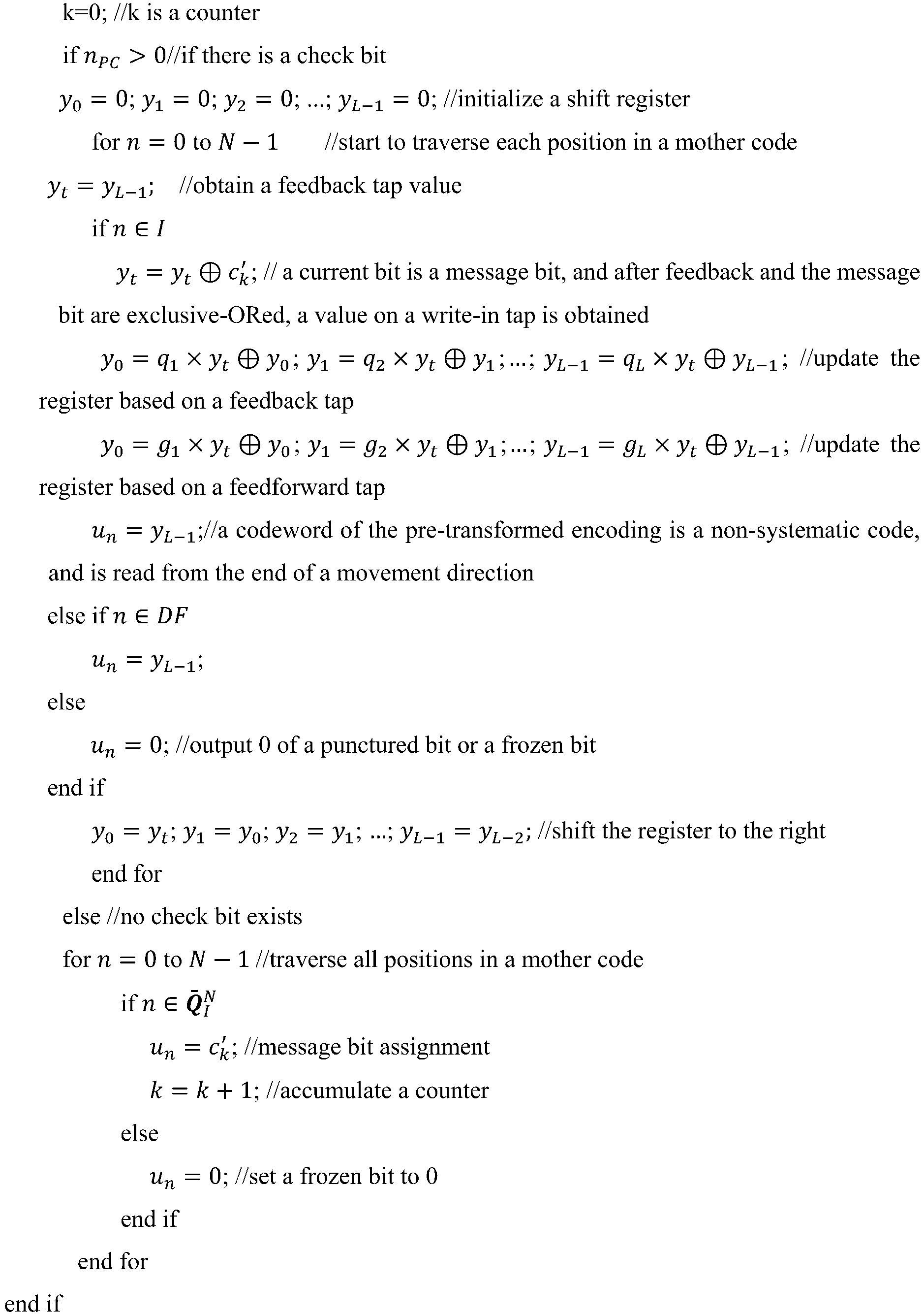

It may be learned from the foregoing pseudocode that, for a structure in Example 5 in which taps in the two tap groups are both used for writing, if the current position in the input sequence corresponds to a message bit, a value in a first register in the shift register is updated to an exclusive OR value of a value in the first register, a value of a first tap corresponding to the first register, and a value of a second tap, where both the value of the first tap and the value of the second tap are an exclusive OR value of an input of the shift register and a feedback input. The feedback input of the shift register is the output of the shift register. Herein, the first tap belongs to the first tap group, and is a feedforward tap. The second tap belongs to the second tap group, and is a feedback tap.

Compared with Example 4, the feedforward manner in Example 5 is changed to multi-tap writing, the feedback manner is also multi-tap writing, and a quantity of taps is greater than or equal to 1.

It should be noted that, after the feedforward polynomial and the feedback polynomial are combined in Example 5, a feedback effect is similar to that in Example 2, that is, after the input of the shift register and the feedback input of the shift register are XORed and then written from the tap, and are output from the end register in the shift direction of the shift register.

In Example 3 to Example 5 above, at least one of the two tap groups is used for writing. The following further provides an embodiment in which taps of shift register each are for reading.

Specifically, the shift register correspond to the at least two taps, and the directions of the at least two taps are read-out. Positions of the at least two taps are determined by a pre-transformed encoding polynomial, and values of a coefficient of a lowest power term and a coefficient of a highest power term of the pre-transformed encoding polynomial are both 1. In addition, if a current position in the input sequence of the pre-transformed encoding corresponds to a dynamic frozen bit, an output of the shift register is related to a value in an L^{th} register in a shift direction of the shift register. The L^{th} register is a register corresponding to the highest power term of the pre-transformed encoding polynomial, and L is an integer greater than or equal to 1. The following provides an example with reference to Example 6 to Example 8.

### Example 6

### Feedforward+poly MSB RHS+right shift+read from a tap

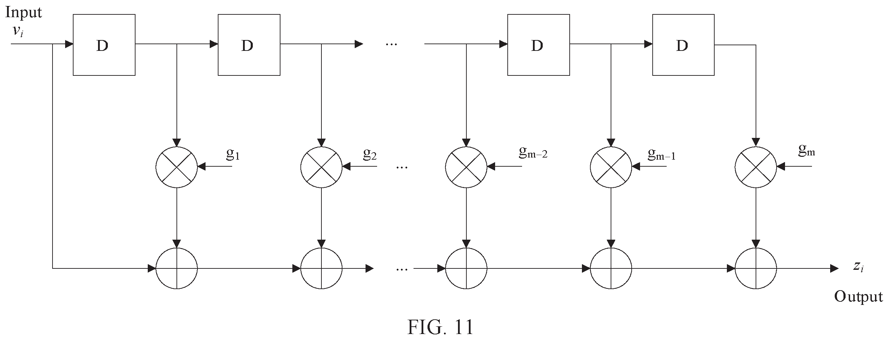

FIG. 11 is a diagram for shift register for which a feedforward tap is for reading. In FIG. 11, the pre-transformed encoding is based on shift register with a feedforward tap, where a position of the feedforward tap is determined based on a pre-transformed encoding polynomial (which may also be referred to as a feedforward polynomial) *g*(*D*) = 1 + *g*₁*D + g*₂D²+...+*gₘ*D*^{m}*. For the pre-transformed encoding polynomial *g*(*D*), refer to the description in Example 1. Details are not described again. Unlike Example 1, in Example 6, a direction of the tap is read-out.

In FIG. 6, the output of the shift register is an exclusive OR value of an input of the shift register and a value of a first tap, where the first tap is a tap corresponding to a power term whose coefficient is greater than 0 in the pre-transformed encoding polynomial.

### Example 7

### Feedback+poly MSB RHS+right shift+read from a tap

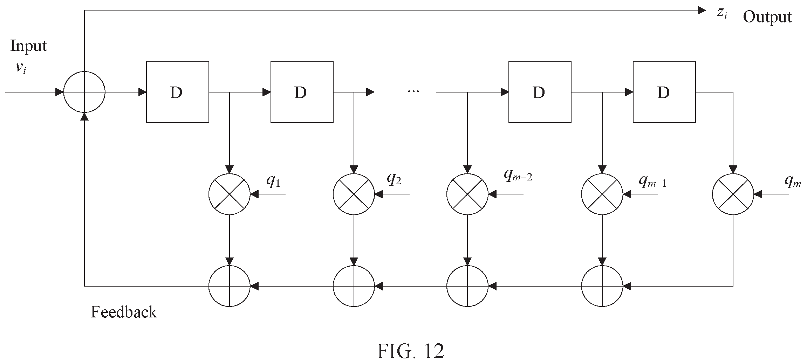

FIG. 12 is a diagram for shift register for which a feedback tap is for reading. The pre-transformed encoding in FIG. 12 is performed based on shift register with a feedback tap. The position of the feedback tap is determined based on a pre-transformed encoding polynomial *q*(*D*) = 1 + *q*₁*D* + *q*₂*D*²+...+*qₘ*D*^{m}.* For the pre-transformed encoding polynomial *q*(*D*), refer to the description in Example 2. Details are not described again. Unlike Example 2, in Example 7, a direction of the tap is read-out.

In Example 7, the output of the shift register is an exclusive OR value of the input of the shift register and a feedback input of the shift register, where the feedback input is an exclusive OR value of at least two taps corresponding to the shift register.

### Example 8

### Feedback+poly MSB RHS+right shift+read from a tap

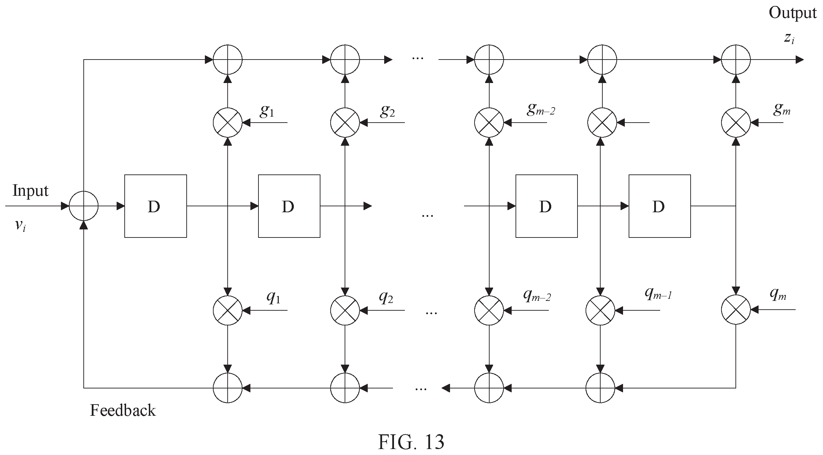

FIG. 13 is a diagram for shift register for which directions of both a feedforward tap and a feedback tap are read-out. The pre-transformed encoding in FIG. 13 is performed based on shift register with a feedforward tap and a feedback tap. The position of the feedforward tap is determined based on the pre-transformed encoding polynomial *g*(*D*) = 1 + *g*₁*D + g*₂D²+...+*gₘ*D*^{m}*, and corresponds to the first tap group; and the position of the feedback tap is determined based on the pre-transformed encoding polynomial *q* (*D*) = 1 *+ q*₁*D + q*₂D²+...+*qₘ*D*^{m}*, and corresponds to the second tap group. For the pre-transformed encoding polynomials *g*(*D*) and *q*(*D*), refer to the description in Example 3. Details are not described again. Unlike Example 3, in Example 8, directions of both the feedforward tap and the feedback tap are read-out.

In Example 8, the output of the shift register is an exclusive OR value of a first input and a value of a tap in the first tap group, the first input is an exclusive OR value of the input of the shift register and the feedback input of the shift register, and the feedback input is an exclusive OR value of values of taps in the second tap group.

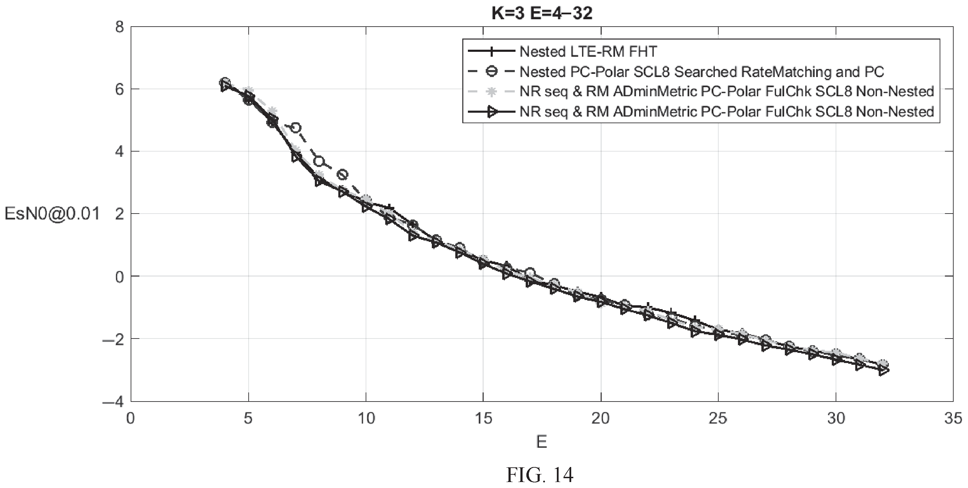

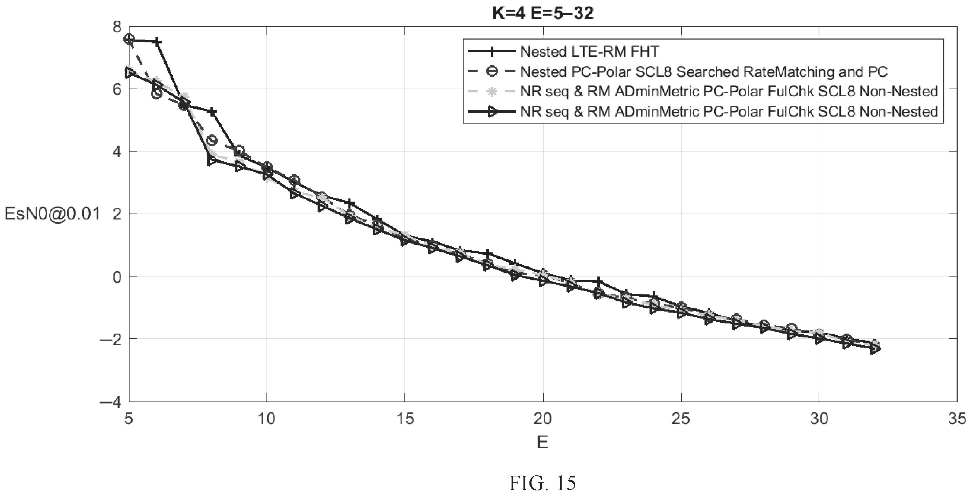

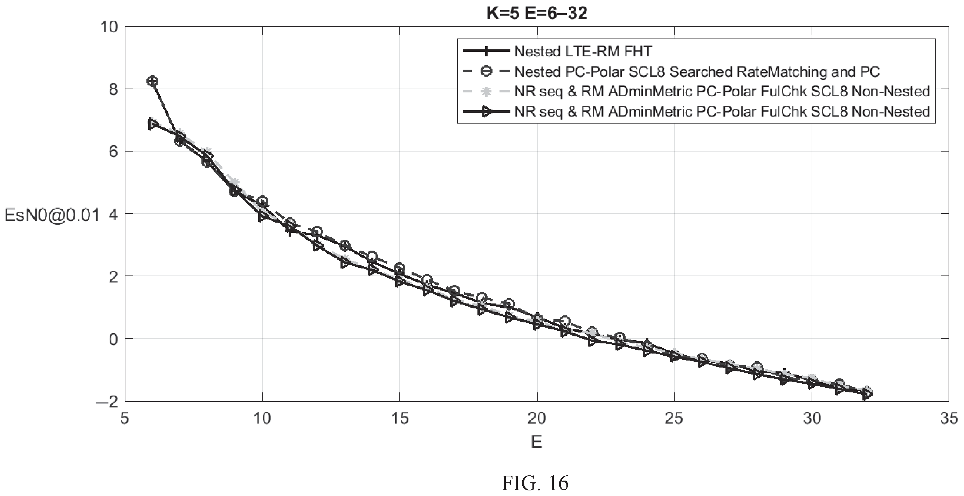

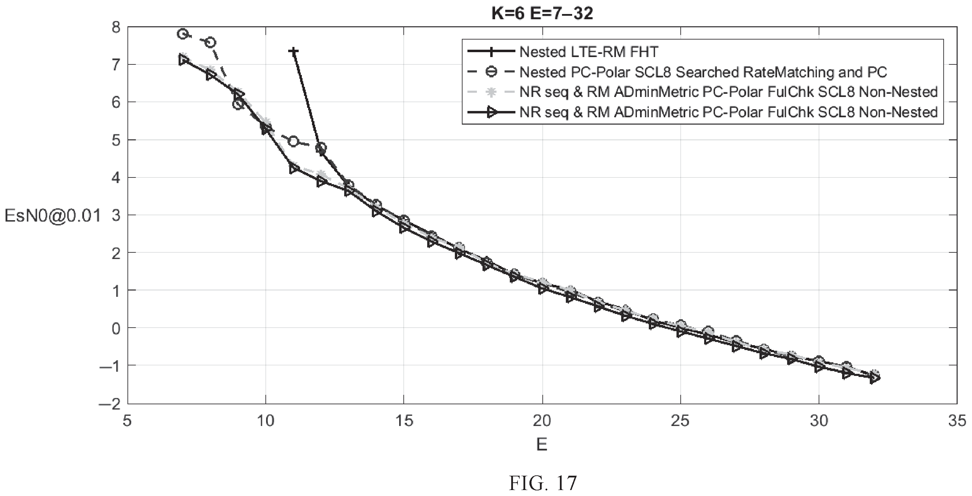

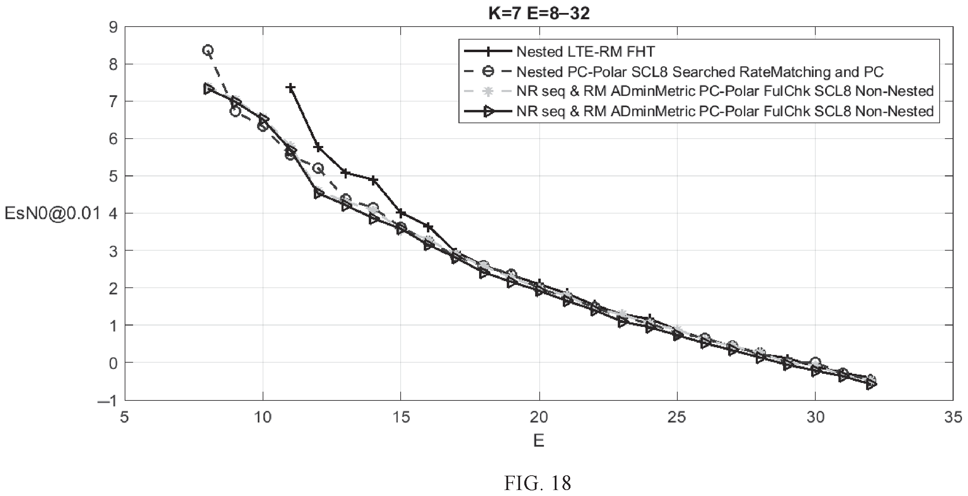

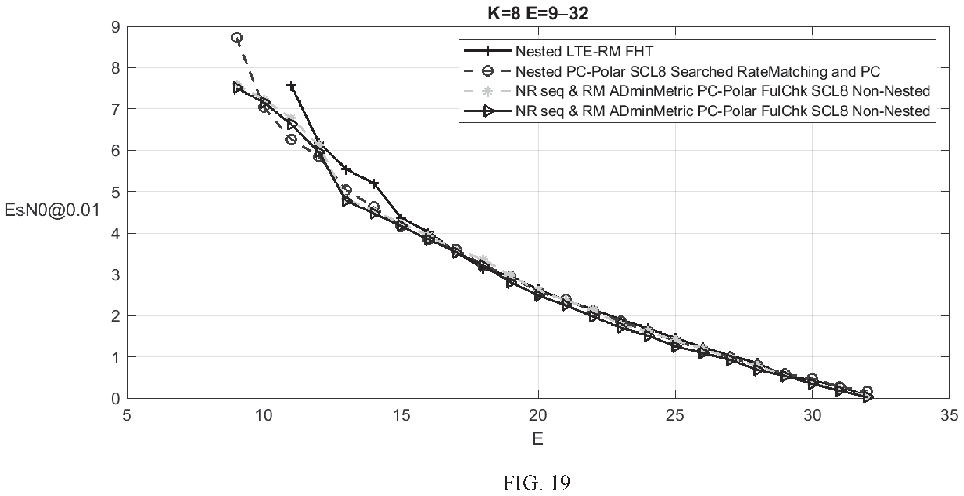

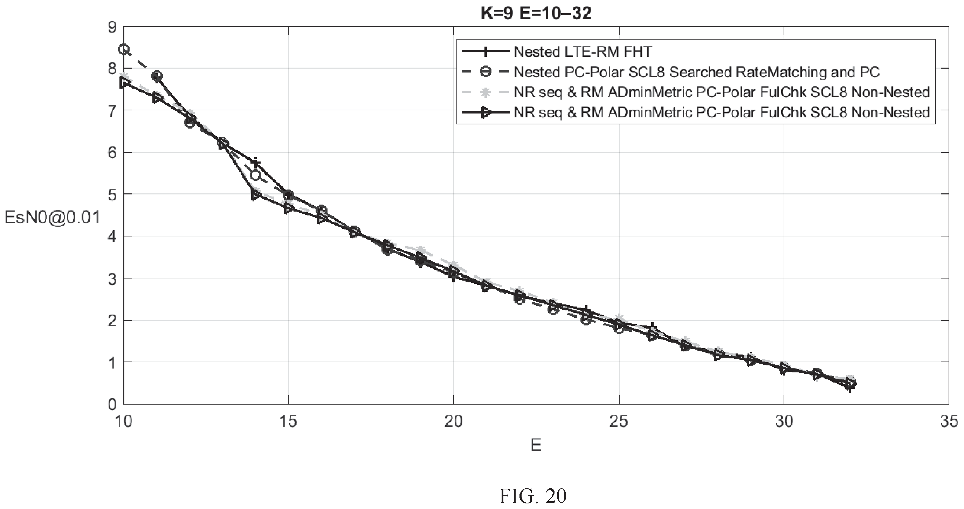

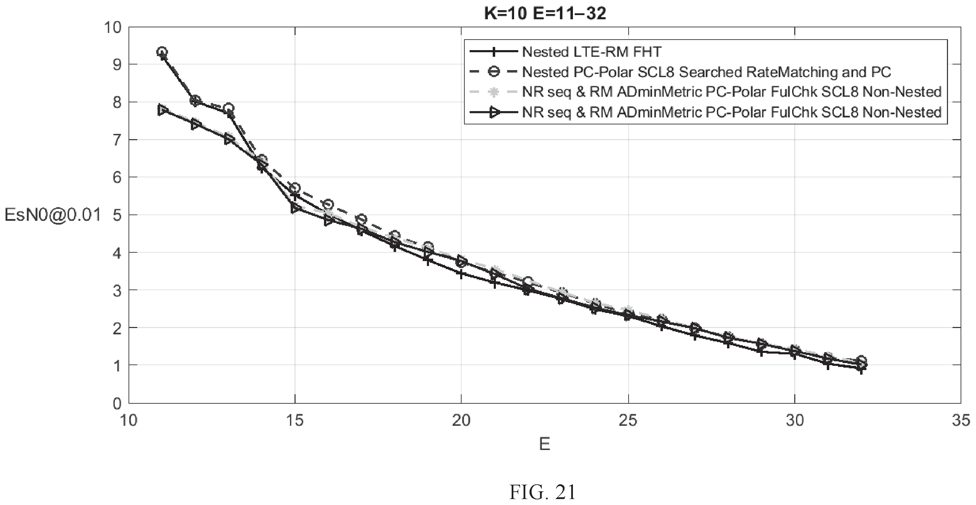

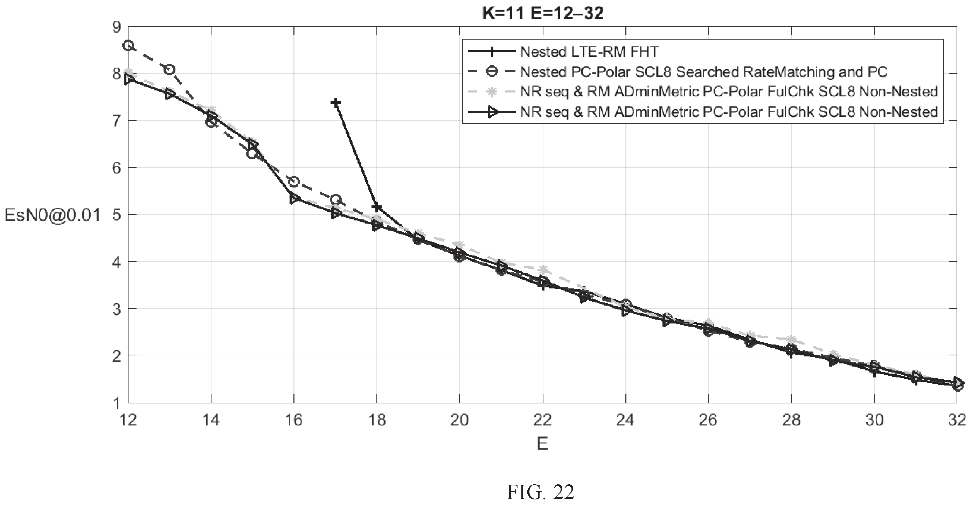

FIG. 14 to FIG. 22 are performance simulation results of an encoding method according to this application. "nested LTE-RM FHT" in a legend is performance of an existing LTE-RM code, "nested PC-polar SCL8 searched RateMatching and PC" is performance of an existing nested PC-Polar code, an asterisk line of "NR seq & RM ADminMetric PC-Polar fulChk SCL8 Non-Nested" is case by case performance, and a triangle line of "NR seq & RM ADminMetric PC-Polar fulChk SCL8 Non-Nested" is case by case performance of feedback, poly MSB RHS, right shift, and writing from a tap. It may be learned from a performance simulation diagram that the solution provided in this application has better performance at a high bit rate (corresponding to relatively small E). In addition, in an entire value range of E, compared with fast Hadamard transform (fast Hadamard transform, FHT), the solutions in this application have lower decoding complexity and basically unchanged or even better performance.

The foregoing describes in detail the encoding methods provided in this application. The following describes a communication apparatus provided in this application.

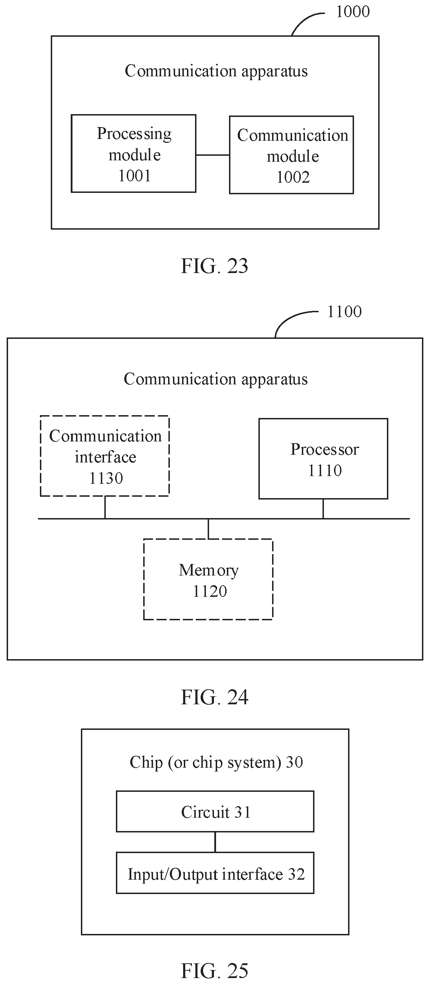

As shown in FIG. 23, this application provides a communication apparatus 1000.

The communication apparatus 1000 may be an encoding device, or may be an apparatus that is used in an encoding device and that can implement a corresponding function of the encoding device in the method embodiments of this application, for example, a chip, a chip system, or a circuit.

Optionally, the communication apparatus 1000 includes a processing module 1001. The processing module may be a processor, a processing board, a processing unit, a processing apparatus, or the like. The processing module 1001 is configured to perform pre-transformed encoding on an input sequence to obtain an output sequence. Optionally, the processing module 1001 is further configured to further perform polar encoding on the output sequence of the pre-transformed encoding, to obtain a codeword sequence. For a specific process, refer to detailed descriptions in the method embodiments. Details are not described herein again.

Optionally, the communication apparatus 1000 further includes a communication module 1002. The communication module may also be referred to as a transceiver module, a transceiver, a transceiver apparatus, or the like, and is configured to perform a receiving (or input) and/or sending (or output) operation. For example, the communication module 1002 may be configured to obtain an input sequence of pre-transformed encoding, output an output sequence of the pre-transformed encoding, or output a concatenated-encoded codeword sequence.

In some embodiments, the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, if the apparatus is implemented by using a chip/circuit (for example, an integrated circuit, a dedicated circuit, or a logic circuit), the communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, division into modules is an example, and is merely logical function division. In actual implementation, another division manner may be used. In addition, functional modules in examples of this application may be integrated into one processor, each of the modules may exist alone physically, or two or more modules may be integrated into one module. The integrated module may be implemented in a form of hardware, or may be implemented in a form of a software functional module.

As shown in FIG. 24, this application further provides a communication apparatus 1100. The communication apparatus 1100 includes at least one processor 1110, to implement functions of the encoding device described in the foregoing method embodiments.

Optionally, the processor 1110 is coupled to a memory. The memory may be located in the communication apparatus. Alternatively, the memory may be integrated with the processor. Alternatively, the memory may be located outside the communication apparatus. The communication apparatus 1100 may further include at least one memory 1120. The memory 1120 stores a computer program, instructions, data, or the like that is necessary for implementing any one of the foregoing method embodiments. The processor 1110 may execute the computer program, the instructions, the data, or the like stored in the memory 1120, to complete the encoding method in any one of the foregoing embodiments.

Optionally, the communication apparatus 1100 may further include a communication interface 1130, and the communication apparatus 1100 may exchange information with another device through the communication interface 1130. For example, the communication interface 1130 may be a transceiver, a circuit, a bus, a module, a pin, or an interface of another type.

The coupling in this application is an indirect coupling or a communication connection between apparatuses, units, or modules, may be in an electrical form, a mechanical form, or another form, and is used for information exchange between the apparatuses, the units, or the modules. The processor 1110 may operate cooperatively with the memory 1120 and the communication interface 1130. A specific connection medium between the processor 1110, the memory 1120, and the communication interface 1130 is not limited in this application.

As shown in FIG. 25, this application further provides a chip (or a chip system). A chip (or a chip system) 30 may include a circuit 31 and an input/output interface 32. The circuit 31 may be a logic circuit, an integrated circuit, or the like. The input/output interface 32 may also be an input/output circuit or an interface circuit, and may enter information (or referred to as receiving information) and output information (or referred to as sending information). Optionally, the chip system may include a chip, or may include a chip and another discrete device. The chip 30 may be configured to perform the method performed by the encoding device in embodiments of this application.

In addition, this application further provides a computer-readable storage medium. The computer-readable storage medium stores computer instructions. When the computer instructions are run on a computer, an operation and/or processing performed by the encoding device in the method embodiments of this application are/is performed.

This application further provides a computer program product. The computer program product includes computer program code or instructions. When the computer program code or the instructions are run on a computer, an operation and/or processing performed by the encoding device in the method embodiments of this application are/is performed.

In addition, this application further provides a chip. The chip includes a processor. A memory configured to store a computer program is disposed independently of the chip, and a processor is configured to execute the computer program stored in the memory, so that an operation and/or processing performed by the encoding device in any method embodiment are/is performed. Further, the chip may include a communication interface. The communication interface may be an input/output interface, an interface circuit, or the like. Further, the chip may further include a memory that stores code and/or instructions required by the chip to perform the encoding method in this application, and the like.

This application provides a communication system, including the encoding apparatus in embodiments of this application. The encoding apparatus is configured to implement steps 310 to 330 in the foregoing method embodiments. In some embodiments, the encoding apparatus is a communication apparatus having a corresponding encoding function in FIG. 23 or FIG. 24, or a chip configured to implement the encoding method in embodiments of this application in FIG. 25.

In the embodiments of this application, "a plurality of" includes two or more.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the apparatus embodiments described above are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. An encoding method, comprising:
obtaining an input sequence;
performing pre-transformed encoding on the input sequence based on a shift register to obtain an output sequence; and
performing polar encoding on the output sequence to obtain a codeword sequence, wherein
the shift register correspond to at least two taps, directions of the at least two taps are write-in, positions of the at least two taps are determined by a pre-transformed encoding polynomial, and values of a coefficient of a lowest power term and a coefficient of a highest power term of the pre-transformed encoding polynomial are both 1; and
if a current position in the input sequence corresponds to a dynamic frozen bit, an output of the shift register is related to a value in an L^{th} register in a shift direction of the shift register, the L^{th} register is a register corresponding to the highest power term of the pre-transformed encoding polynomial, and L is an integer greater than or equal to 1.

2. The method according to claim 1, wherein a value in the L^{th} register is related to values in the first L-1 registers.

3. The method according to claim 2, wherein if the current position in the input sequence is a message bit, a value in a first register in the shift register is updated to an exclusive OR of the value in the first register and a value of a first tap corresponding to the first register, the value of the first tap is an input of the shift register, and the first register is any register in the shift register.

4. The method according to claim 1, wherein a value in the L^{th} register is related to all message bits located before the current position in the input sequence.

5. The method according to claim 4, wherein if the current position in the input sequence is a message bit, a value of a first register in the shift register is updated to an exclusive OR value of the value in the first register and a value of a corresponding first tap, the value of the first tap is an exclusive OR value of a value of a feedback input and the message bit at the current position, and the first register is any register in the shift register.

6. The method according to any one of claims 1 to 5, wherein if the current position in the input sequence corresponds to the message bit, the output of the shift register is related to the value in the L^{th} register in the shift direction of the shift register; or
if the current position in the input sequence corresponds to a frozen bit, the output of the shift register is 0.

7. The method according to any one of claims 1 to 5, wherein if the current position in the input sequence corresponds to the message bit, the output of the shift register is the input of the shift register; or
if the current position in the input sequence corresponds to a frozen bit, the output of the shift register is 0.

8. The method according to any one of claims 1 to 7, wherein a length L of the shift register is a prime number.

9. The method according to claim 8, wherein L is 5 or 7;
if L is 7, a quantity of taps corresponding to the shift register does not exceed 5; or
if L is 5, a quantity of taps corresponding to the shift register does not exceed 3.

10. The method according to claim 1, wherein that the shift register correspond to the at least two taps, the directions of the at least two taps are write-in, the positions of the at least two taps are determined by the pre-transformed encoding polynomial, and the values of the coefficient of the lowest power term and the coefficient of the highest power term of the pre-transformed encoding polynomial are both 1 comprises:
the shift register correspond to two tap groups, and a direction of a tap in at least one of the two tap groups is write-in;
a position of a tap in a first tap group in the two tap groups is determined by a first pre-transformed encoding polynomial, and a position of a tap in a second tap group in the two tap groups is determined by a second pre-transformed encoding polynomial; and
a value of a coefficient of a lowest power term and a value of a coefficient of a highest power term of each of the first pre-transformed encoding polynomial and the second pre-transformed encoding polynomial are 1.

11. The method according to claim 10, wherein a direction of a tap in the first tap group is write-in, and a direction of a tap in the second tap group is read-out; and
if the current position in the input sequence corresponds to a message bit, a value in a first register in the shift register is updated to an exclusive OR value of a value in the first register and a value of a first tap corresponding to the first register, the value of the first tap is an exclusive OR value of a feedback input and the message bit at the current position, the feedback input is an exclusive OR value of a value of a tap corresponding to a power term whose coefficient is greater than 0 in the second pre-transformed encoding polynomial, and the first register is any register in the shift register.

12. The method according to claim 10, wherein a direction of a tap in the first tap group is write-in, and a direction of a tap in the second tap group is write-in; and
if the current position in the input sequence corresponds to a message bit, a value in a first register in the shift register is updated to an exclusive OR value of a value in the first register, a value of a first tap corresponding to the first register, and a value of a second tap, the value of the first tap or the value of the second tap is an exclusive OR value of an input of the shift register and a feedback input, and the feedback input is the output of the shift register, wherein the first tap belongs to the first tap group, and the second tap belongs to the second tap group.

13. The method according to claim 11 or 12, wherein if the current position in the input sequence corresponds to the message bit, the output of the shift register is related to the value in the L^{th} register in the shift direction of the shift register; or
if the current position in the input sequence corresponds to a frozen bit, the output of the shift register is 0.

14. The method according to claim 11 or 12, wherein if the current position in the input sequence corresponds to the message bit, the output of the shift register is the input of the shift register; or
if the current position in the input sequence corresponds to a frozen bit, the output of the shift register is 0.

15. The method according to claim 10, wherein a direction of a tap in the first tap group is read-out, and a direction of a tap in the second tap group is write-in; and
if the current position in the input sequence corresponds to a message bit, a value in a first register in the shift register is updated to an exclusive OR value of the value in the first register and a value of a first tap corresponding to the first register, the first tap belongs to the second tap group, and the first register is any register in the shift register.

16. The method according to claim 15, wherein if the current position in the input sequence corresponds to the message bit, the output of the shift register is related to a value of the tap in the first tap group; or
if the current position in the input sequence corresponds to a frozen bit, the output of the shift register is 0.

17. The method according to claim 16, wherein if the current position in the input sequence corresponds to the message bit, the output of the shift register is related to the value of the tap in the first tap group, and that the output of the shift register is related to the value of the tap in the first tap group comprises:
if the current position in the input sequence corresponds to the message bit, the output of the shift register is an exclusive OR value of a value of a tap corresponding to a power term whose coefficient is greater than 0 in the first pre-transformed encoding polynomial.

18. The method according to claim 15, wherein if the current position in the input sequence corresponds to the message bit, the output of the shift register is the input of the shift register; or
if the current position in the input sequence corresponds to a frozen bit, the output of the shift register is 0.

19. The method according to any one of claims 15 to 18, wherein a value of a tap in the second tap group is an exclusive OR value of the input of the shift register and a feedback input, and the feedback input is the value in the L^{th} register in the shift direction of the shift register.

20. A communication apparatus, comprising:
a communication module, configured to obtain an input sequence; and
a processing module, configured to:
perform pre-transformed encoding on the input sequence based on shift register to obtain an output sequence; and
perform polar encoding on the output sequence to obtain a codeword sequence, wherein
the shift register correspond to at least two taps, directions of the at least two taps are write-in, positions of the at least two taps are determined by a pre-transformed encoding polynomial, and values of a coefficient of a lowest power term and a coefficient of a highest power term of the pre-transformed encoding polynomial are both 1; and
if a current position in the input sequence corresponds to a dynamic frozen bit, an output of the shift register is related to a value in an L^{th} register in a shift direction of the shift register, the L^{th} register is a register corresponding to the highest power term of the pre-transformed encoding polynomial, and L is an integer greater than or equal to 1.

21. A communication apparatus, comprising a communication interface and a circuit, wherein the communication interface is configured to receive an input sequence, and input the input sequence to the circuit; and the communication interface is further configured to output a codeword sequence, wherein the codeword sequence is output by the circuit; and
the circuit is configured to implement the method according to any one of claims 1 to 19.

22. A communication apparatus, comprising:
a processor, wherein the processor is coupled to a memory, and the processor is configured to execute a computer program or instructions stored in the memory, so that the method according to any one of claims 1 to 19 is implemented.

23. A computer-readable storage medium, wherein the computer-readable storage medium stores computer instructions; and when the computer instructions are run on a computer, the method according to any one of claims 1 to 19 is implemented.

24. A computer program product, wherein the computer program product comprises computer program code or instructions, and when the computer program code or instructions are run on a computer, the method according to any one of claims 1 to 19 is implemented.
